(19) Europäisches Patentamt
European Patent Office
Office européen des brevets

(11) EP 0 970 981 A1

(12) EUROPEAN PATENT APPLICATION
published in accordance with Art. 158(3) EPC

(43) Date of publication:
12.01.2000 Bulletin 2000/02

(21) Application number: 98911041.6

(22) Date of filing: 27.03.1998

(51) Int. Cl.$^7$: C08G 59/40, C08L 63/00, C08K 5/56, C08L 83/16

(86) International application number:
PCT/JP98/01373

(87) International publication number:
WO 98/44018 (08.10.1998 Gazette 1998/40)

(84) Designated Contracting States:
DE FR GB

(30) Priority: 27.03.1997 JP 7609697
20.08.1997 JP 22400797
20.08.1997 JP 22402797
20.08.1997 JP 22403697
20.08.1997 JP 22405297
25.12.1997 JP 35797697
20.03.1998 JP 7226698
24.03.1998 JP 7608698
24.03.1998 JP 7609498
24.03.1998 JP 7609898
24.03.1998 JP 7611398

(71) Applicant:
Osaka Gas Company Limited
Osaka-shi, Osaka 541-0046 (JP)

(72) Inventors:
- KAWASAKI, Shinichi,
Osaka Gas Company Ltd.
Osaka-shi, Osaka 541-0046 (JP)
- MURASE, Hiroaki,
Osaka Gas Company Ltd.
Osaka-shi, Osaka 541-0046 (JP)
- FUJIKI, Tsuyoshi,
Osaka Gas Company Ltd.
Osaka-shi, Osaka 541-0046 (JP)
- NISHIDA, Ryoichi,
Osaka Gas Company Ltd.
Osaka-shi, Osaka 541-0046 (JP)
- SAKAI, Shiro,
Kansai Research Inst.
Kyoto-shi, Kyoto 600-8813 (JP)
- ZAIMA, Hiroaki,
Kansai Research Inst.
Kyoto-shi, Kyoto 600-8813 (JP)

(74) Representative:
Müller-Boré & Partner
Patentanwälte
Grafinger Strasse 2
81671 München (DE)

# (54) EPOXY RESIN COMPOSITION AND MOLDINGS

(57) The present invention provides epoxy resin compositions comprising a Si-Si bond-containing silane compound and an epoxy compound; cured epoxy compositions; formed articles; and products or articles having a cured epoxy coating film.

## Description

TECHNICAL FIELD

The present invention relates to epoxy resin compositions containing a silane compound.

BACKGROUND ART

In recent years, epoxy resins have been used as raw materials for coating compositions, formed articles, adhesives, etc., in various industrial fields such as electric materials, electric insulating materials, general industrial apparatus, automobiles and energy converters.
However, epoxy resins are not fully satisfactory in heat resistance, dielectric constant, flame retardancy and other properties. It is thus necessary for epoxy resins to be improved in such properties.

BRIEF DESCRIPTION OF DRAWINGS

Fig. 1 is a chart showing the result of $^{29}$Si-NMR analysis of the resin composition pellets obtained in one example of the second invention of this application.
Fig. 2 is a chart showing the result of $^{13}$C-NMR analysis of the resin composition pellets obtained in one example of the second invention of this application.

DISCLOSURE OF THE INVENTION

An object of the present invention is to provide novel epoxy resin compositions improved in heat resistance, dielectric constant, flame retardancy and other properties, as compared with epoxy resins.
In view of the above state of the art, the present inventors did extensive research and found that the above problems can be solved by mixing a silane compound with an epoxy compound. The present invention has been accomplished based on this novel finding.
The present invention provides the following epoxy resin compositions and formed articles prepared from these compositions.
To facilitate explanation, the present invention is divided into the first to fourth inventions, which will be respectively described below in detail.

Definition of terms

As used herein, the terms "alkyl group", "alkenyl group" and "aryl group" concerning the first to fourth inventions have the following meanings.
"Alkyl group" is intended to mean a linear, cyclic or branched monovalent $C_{1-14}$ aliphatic hydrocarbon group.
"Alkenyl group" is intended to mean a linear, cyclic or branched monovalent $C_{1-14}$ aliphatic hydrocarbon group having at least one carbon-carbon double bond.
"Aryl group" is intended to mean an aromatic hydrocarbon group which is unsubstituted or substituted by at least one substituent.
The term "composition" as used herein means a substance or material comprising two or more compounds all or part of which are chemically bonded to each other.

I. First invention

The first invention of this application provides the following epoxy resin compositions, formed articles, and products or articles having a cured epoxy coating film.

I-1. An epoxy resin composition comprising a Si-Si bond-containing silane compound, an epoxy compound and a curing agent.
I-2. An epoxy resin composition according to Item I-1 wherein the silane compound is a polysilane.
I-3. An epoxy resin composition according to Item I-2 wherein the polysilane has network structure.
I-4. A cured epoxy resin composition obtainable by curing an epoxy resin composition comprising a Si-Si bond-containing silane compound, an epoxy compound and a curing agent.

I-5. A cured epoxy resin composition according to Item I-4 wherein the silane compound is a polysilane.
I-6. A cured epoxy resin composition according to Item I-5 wherein the polysilane has network structure.
I-7. A formed article comprising a cured epoxy resin composition according to any one of Items I-4 to I-6.
I-8. A formed article according to Item I-7 which is in the form of a coating film.
I-9. A process for producing a product or article having a cured coating film, the process comprising the steps of applying an epoxy resin composition according to any one of Items I-1 to I-3 to a substrate surface to obtain a coating, and curing the coating.
I-10. A product or article having a cured coating film, the product or article being obtainable by the process according to I-9.
I-11. A product or article according to Item I-10 wherein the cured coating film is a surface protective film.
I-12. A product or article according to Item I-11 wherein the surface protective film is a corrosion-resistant protective film, a heat-resistant protective film or a flame-retardant protective film.
I-13. A product or article according to Item I-10 wherein the cured coating film is an interlayer electrical insulating film.

The epoxy resin compositions of the first invention comprise an epoxy compound and a silane compound.
According to the first invention, the silane compound for use in the composition comprising an epoxy compound and a silane compound (hereinafter sometimes referred to simply as "mixture") is not limited as long as it is a linear, cyclic or branched compound having a Si-Si bond. The silane compound may contain a Si-C bond, Si-O bond, Si-N bond, Si-O-M bond (M=Ti or Zr) or Si-B bond in its molecule. Examples of such compounds include polysilanes.
The polysilane as used herein is at least one polymer selected from the group consisting of:

linear or cyclic polysilanes having a main skeletal structure represented by the formula

$$(R_2Si)_m \qquad (1)$$

wherein R's are the same or different, each R is independently an alkyl, alkenyl, arylalkyl, aryl, alkoxyl or amino group, and m is 2 to 10,000;
silicon network polymers having a main skeletal structure represented by the formula

$$(RSi)_n \qquad (2)$$

wherein R's are the same or different, each R is independently alkyl, alkenyl, arylalkyl, aryl, alkoxyl or amino group, and n is 4 to 10,000; and
silicon network polymers having a main skeletal structure represented by the formula

$$(R_2Si)_x(RSi)_ySi_z \qquad (3)$$

wherein each R is independently an alkyl, alkenyl, arylalkyl, aryl, alkoxyl or amino group, all the R's may be the same or at least two of them may be different from each other, and $x + y + z = 5$ to 10,000 .

Among these polymers, polysilanes having network structure represented by the formula (2) or (3) are preferred.
These polymers can be prepared from monomers having respective structural units, by methods such as dehalogenation condensation polymerization of a halosilane in the presence of an alkali metal ("Kipping method", J. Am. Chem. Soc., 110, 124 (1988), Macromolecules, 23, 3423 (1990)); dehalogenation condensation polymerization of a halosilane by electrode reduction (J. Chem. Soc., Chem. Commun., 1161 (1990); J. Chem. Soc., Chem. Commun., 897 (1992)): dehydrogenation condensation polymerization of a hydrosilane in the presence of a metal catalyst (Japanese Unexamined Patent Publication No. 334551/1992); anionic polymerization of disilene crosslinked with biphenyl or the like (Macromolecules, 23, 4494 (1990)); and ring-opening polymerization of a cyclic silane.
Also, a Si-Si bond-containing silicon-based polymer obtainable by heating a polysilane to 300°C or above can be used in place of the above polysilanes, in an atmosphere of an inert gas such as nitrogen or argon, or in air.
The epoxy compound for use in the epoxy resin composition of the invention is not limited as long as it is a linear, cyclic or branched compound having at least one epoxy group. Examples of such compounds include 1,2,3,4-diepoxybutane, 1,4-cyclohexanedimethanol diglycidyl ether, N,N-diglycidyl-4-glycidyl oxyaniline, 1,2,5,6-diepoxycyclooctane, and the following epoxy compounds:

1. Epi- or bis-glycidyl ethers

(1) Bisphenol A glycidyl ether

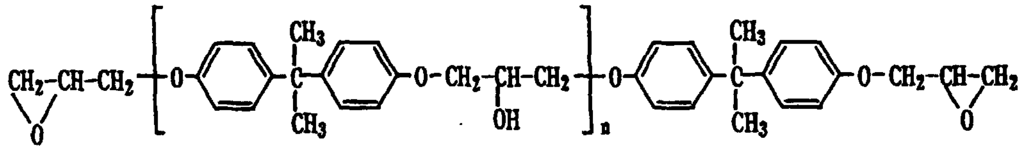

(2) Bisphenol AD glycidyl ether

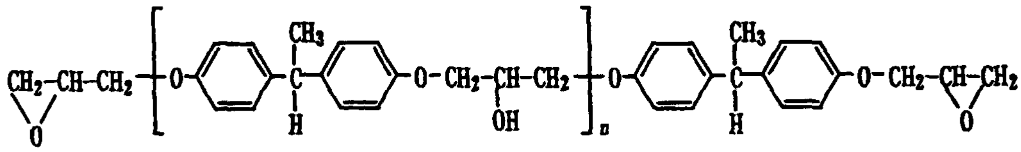

(3) Bisphenol S glycidyl ether

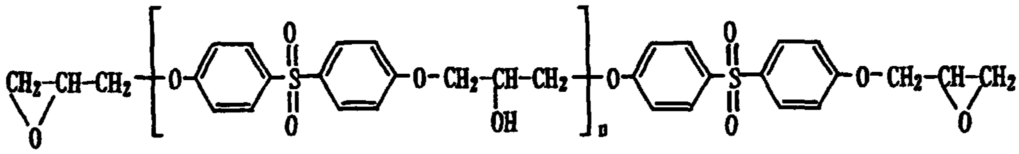

(4) Bisphenol F glycidyl ether

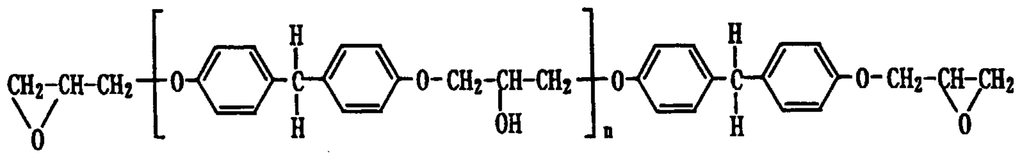

2. Novolac glycidyl ethers

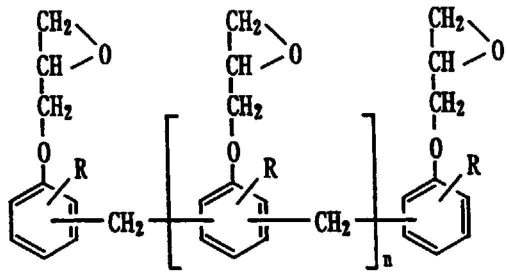

R:H, $CH_3$

3. Brominated glycidyl ethers

(1) 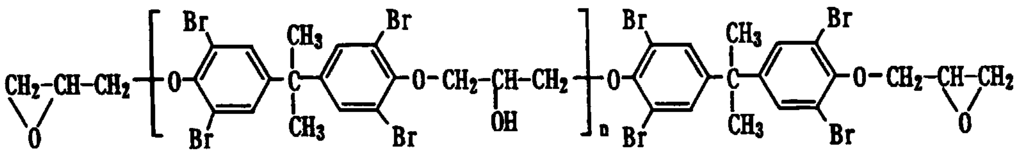

(2) 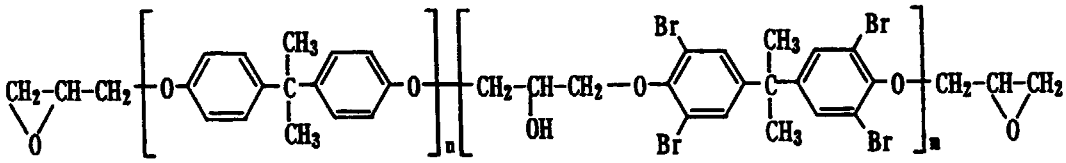

(3) 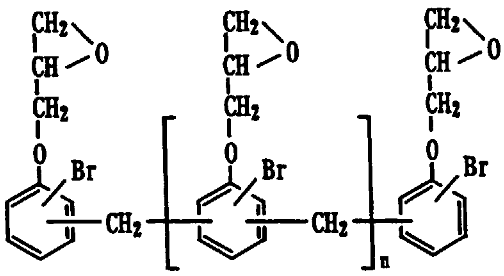

4. Other glycidyl ethers

(1) Tetrakis(glycidyloxyphenyl)ethane

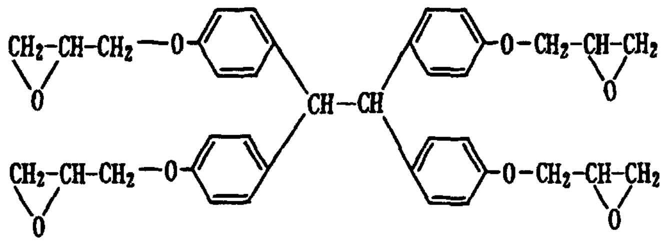

(2) Biphenyl glycidyl ether

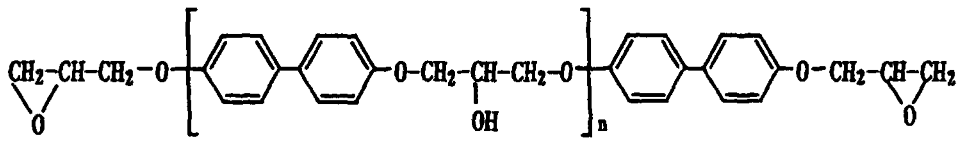

(3) Naphthalene glycidyl ether

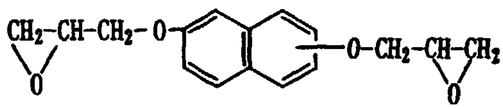

5. Nitrogen-containing epoxy compounds

(1) Triglycidyl isocyanurate

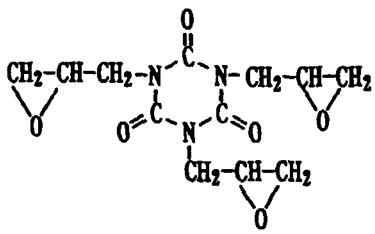

(2)Hydantoin epoxy compound

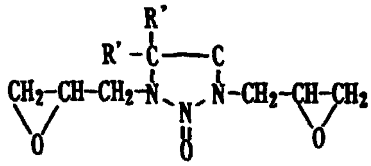

(R', R": $CH_3$, $CH_3$; or $CH_3$, $C_2H_5$; or $C_2H_5$, $C_5H_{11}$)

6. Glycidyl esters

(1) Phthalic acid glycidyl ester

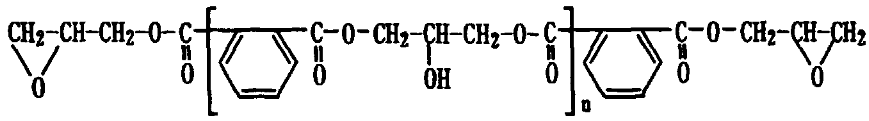

(2) Hexahydrophthalic acid glycidyl ester

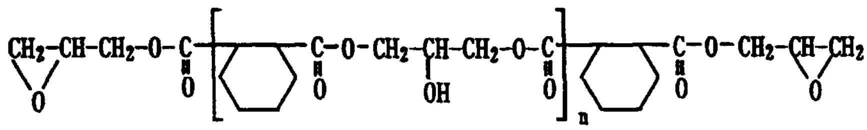

(3) Tetrahydrophthalic acid glycidyl ester

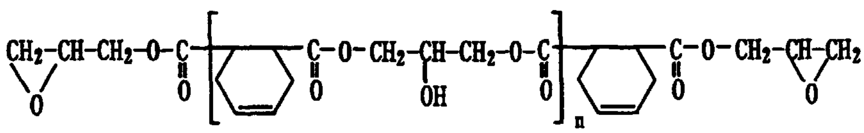

(4) Benzoic acid glycidyl ester

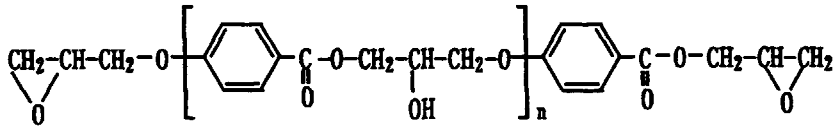

(5) Dimer acid glycidyl ester and like glycidyl esters

7. Peracetic acid oxides

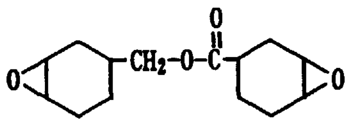

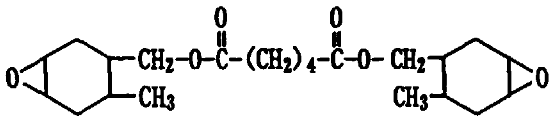

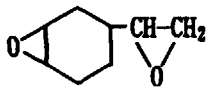

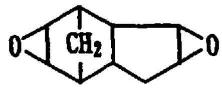

Epoxydized soybean oil

8. Glycol glycidyl ethers

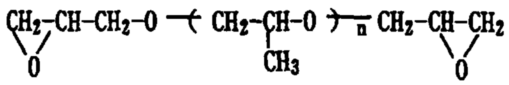

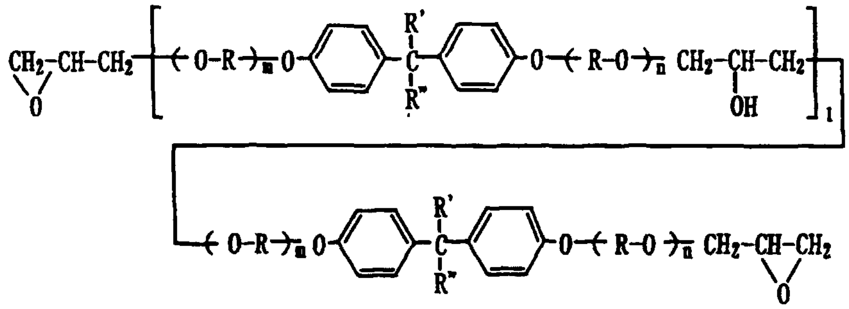

($R$: $C_2H_5$ or $C_3H_6$; $R'$, $R''$: H or $CH_3$)

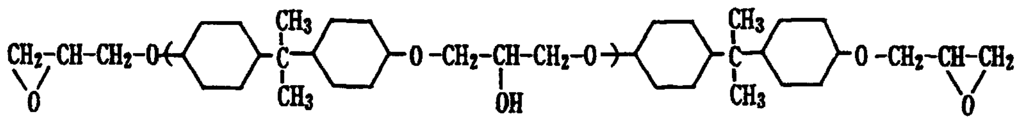

9. Silicon-containing epoxy compounds

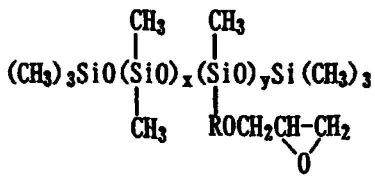

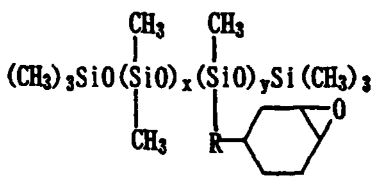

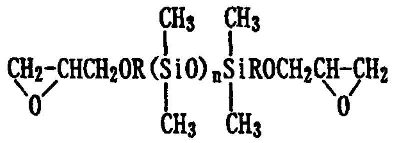

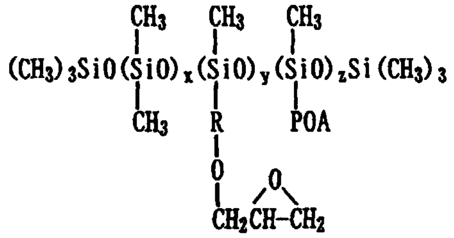

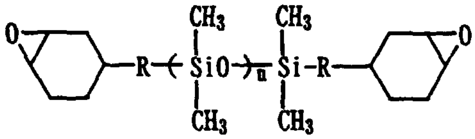

In the mixture of the invention, the ratio of the silane compound to the epoxy compound is usually about 0.01 to 100 parts by weight, preferably about 0.05 to 100 parts by weight, more preferably about 0.1 to 10 parts by weight of the silane compound, to 1 part by weight of the epoxy compound.

According to the invention, a cured resin composition is obtained by heating and/or light irradiation.

When the composition of the invention is to be heated, useful curing agents include, for example, silicon compounds such as 1,2-disilylethane, ethyl silicate, methyl silicate and like polyalkoxysilanes; tetraalkoxytitanium and like titanium compounds; phenyldichloroborane and like boron compounds; benzoyl peroxide, tert-butyl peroxide, azoisobutyronitrile and like radical-generating compounds; trismethoxy aluminum, trisphenoxy aluminum and like organic aluminum compounds; triethylamine, pyridine, diethylenetriamine, triethylenetetramine, methaxylenediamine, diaminodiphenylmethane, tris(dimethylaminomethyl)phenol, 2-ethyl-4-methylimidazole and like amine compounds; dimer acid polyamide and like amide compounds; phthalic anhydride, tetrahydromethylphthalic anhydride, hexahydrophthalic anhydride, trimellitic anhydride, methyl nadic anhydride and like acid anhydrides; phenol novolac and like phenols; polysulfide and like mercaptan compounds; boron trifluoride-ethylamine complex and like Lewis acid complex compounds; chloroform, dichloromethane, trichloromethane and like halides; and sodium ethoxide and like basic compounds. Among these compounds, preferred are amine compounds, acid anhydrides and phenols. The amount of the curing agent to be used is usually about 0.1 to 100 parts by weight, preferably about 1 to 90 parts by weight, per 100 parts by weight of the epoxy compound.

When the composition of the invention is to be irradiated with light, the composition may contain a photoinitiator as a curing agent. Useful photoinitiators include pyridinium salts (e.g., N-ethoxy-2-methylpyridinium-hexafluorophosphate, and N-ethoxy-4-phenylpyridinium-hexafluorophosphate), sulfonium salts (e.g., commercial products available from Sanshin Kagaku Kogyo K.K. under the trademarks "Sun Aid SI-60L", Sun Aid SI-80L" and "Sun Aid SI-100L"), ferrocene compounds (e.g., a commercial product available from Ciba Specialty Chemicals under the trademark "Irgacure 261"), triazine compounds (e.g., a commercial product available from Nihon Siber Hegner under the trademark "Triazine A"), and iodonium salts (e.g., a commercial product available from Midori Chemicals Co., Ltd. under the trademark "BBI-101"). The resin composition may further contain photosensitizers such as benzophenone and its derivatives, o-benzoyl benzoic ester and its derivatives, acetophenone and its derivatives, benzoin, benzoin ether and their derivatives, xanthone and its derivatives, thioxanthone and its derivatives, disulfide compounds, quinone compounds, halogenated hydrocarbon group-containing compounds, amines and coloring matters.

The amount of the curing agent to be used for light irradiation is about 0.1 to 30 parts by weight, preferably about 1 to 15 parts by weight, per 100 parts by weight of the epoxy compound.

The heating can be carried out at a temperature below the temperature at which the Si-Si bond of the silane compound in the composition is cleaved, i.e., usually at about 30 to 180° C, preferably about 50 to 120° C. The heating is carried out preferably in the presence of a curing agent, in an oxygen-containing gas such as air or in an atmosphere

of an inert gas such as nitrogen or argon.

When light irradiation is employed, the mixture is irradiated with light in the presence of a curing agent, using a fluorescent lamp, low pressure mercury lamp, high pressure mercury lamp, hydrogen lamp, heavy hydrogen lamp, halogen lamp, helium-neon laser, argon laser, nitrogen laser, helium-cadmium laser, dye laser or like light source. The wavelength of the light is usually about 220 to 700 nm, and is preferably longer than the maximum absorption wavelength of the silane compound. The irradiation time is usually about 5 seconds to 120 minutes, preferably about 20 seconds to 30 minutes. The light irradiation is carried out preferably in the presence of a curing agent, in an oxygen-containing gas such as air, or in an atmosphere of an inert gas such as nitrogen or argon.

The resin composition of the invention may further contain at least one inorganic filler. Usable inorganic fillers include silica sand, quartz, novaculite, diatomaceous earth and like silica fillers; synthetic amorphous silica and like silica fillers; kaolinite, mica, talc, wollastonite, asbestos, calcium silicate, aluminum silicate and like silicate fillers; glass powders, glass beads, hollow glass beads, glass flakes and foam glass beads and like glass fillers; boron nitride, boron carbide, aluminum nitride, aluminum carbide, silicon nitride, silicon carbide, titanium boride, titanium nitride, titanium carbide and like non-oxide inorganic fillers; calcium carbonate; zinc oxide, alumina, magnesia, zirconia, titanium oxide, beryllium oxide and like metal oxides; barium sulfate, molybdenum bisulfate, tungsten bisulfate, carbon fluoride and like inorganic fillers; powders of aluminum, bronze, lead, stainless steel, zinc and like metals; and carbon black, coke, graphite, pyrolytic carbon, hollow carbon beads and like carbon fillers.

These fillers may be in any of various forms such as fibers, needles (including whiskers), particles and flakes, and can be used singly or in combination.

The resin composition of the invention may contain, when so required, antimonous trioxide and like flame retarding aids; natural waxes, synthetic waxes, linear aliphatic acids and their metal salts, acid amides, esters, paraffins and like releasing agents; carbon black, titanium dioxide and like pigments; esters, polyols, polysulfides, urethane prepolymers and like plasticizers; carboxyl-terminated butadiene-acrylonitrile copolymer rubbers, ethylene-vinyl acetate copolymers and like liquid rubbers; silane coupling agents, titanium coupling agents and like surface modifiers; and silicone oils, silicone rubbers, various plastic powders, various engineering plastic powders, ABS resin powders and MBS resin powders or like stress reducing agents.

The resin composition of the invention may further contain, when so required, flow modifiers, leveling agents, antifoaming agents, antistatic agents, UV absorbers, dispersing agents or like additives.

The curing agents, photosensitizing agents, fillers or like additives, when used, can be added to the silane compound and/or epoxy compound before mixing, or to the mixture of the two compounds before the heating and/or light irradiation.

The formed article obtainable from the resin composition of the invention may be in a desired form or shape such as sheet, film, pellets, coating film, mass or powder.

The formed article of the invention can be obtained in the following manner. The composition comprising the silane compound and epoxy compound is applied to a substrate surface by spray coating, bar coating, flow coating, dipping, casting or like known coating method, or compression-molded, cast-molded or transfer-molded, or impregnated into a porous substrate (such as ceramic fiber, glass fiber or carbon fiber), followed by heating and/or light irradiation.

For application to a substrate surface, the mixture can be used in the form of a solution in an organic solvent. Examples of usable organic solvents include tetrahydrofuran, benzene, toluene, xylene, ethanol, butanol, dimethoxysilane, dimethylacetoamide, dimethylformamide methyl cellosolve, butyl cellosolve, diethylene glycol monoethyl ether, diethylene glycol monobutyl ether, dimethyl sulfoxide and phenols. The concentration of the mixture in the solution is not limited, but is usually about 1 to 60 w/v%, preferably about 10 to 40 w/v%.

The substrate is not limited as long as it can withstand the predetermined conditions of heating and/or light irradiation, and may be a metal, ceramic, glass, plastic or the like.

The coating film formed from the resin composition of the invention is usable as a protective film for various purposes, and exhibits excellent properties as a heat-resistant coating, corrosion-resistant coating, flame-retardant coating and like coatings. Also, the coating film is highly effective as an interlayer electrical insulating film.

The material of the substrate to be coated with the interlayer electrical insulating film of the invention may be a resin, glass, ceramic or like material for insulative substrates; a crystalline silicon, amorphous silicon or like material for semiconductive substrates; a metal or like material for conductive substrates; a laminate comprising any of the above-mentioned substrates and a conductive layer formed thereon; a composite of these materials; or a printed wiring board or like wiring structure. The materials of the conductive substrate and conductive layer formed on the substrate are not limited as long as they have conductivity, and may be aluminum, copper, gold, silver, platinum, chromium, nickel, tungsten, indium, alloy of these metals, ITO, and metal oxides such as tin oxide. The conductive layer can be formed by vapor deposition, sputtering, laser abrasion, electrolytic plating, non-electrolytic plating or like conventional method.

The resin composition of the invention is applied to the substrate and cured to obtain a cured coating film.

Further, a conductive material in the form of a sheet or foil may be bonded onto the interlayer electrical insulating film of the invention with an adhesive or by compression or fusing to obtain a multi-layer structure.

Moreover, via holes may be formed on the interlayer electrical insulating film of the invention by performing the light irradiation of the resin composition coating film through a mask having a via hole pattern, followed by development.

The interlayer electrical insulating film of the invention is formed by the above procedure, which can be repeated to obtain a multi-layer wiring structure. When the electrical insulating film of the invention is formed as the outermost layer, it serves also as a surface protective film of the wiring structure.

The interlayer electrical insulating film according to the first invention has a good adhesion to metals, inorganic materials and like materials, and possesses various unique characteristics such as high heat resistance, excellent electric properties (low dielectric constant, low dielectric loss tangent and high insulation properties), low moisture absorption coefficient, high heat conductivity and low heat expansion coefficient. Accordingly, the film of the invention will find wide applications in various fields.

II. Second invention

The second invention of this application provides the following epoxy resin compositions, formed articles, and products or articles having a cured epoxy coating film.

II-1. A resin composition obtainable by heat-treating a mixture comprising a Si-Si bond-containing silane compound and an epoxy compound, at a temperature not lower than the temperature at which carbon in the side chain of the Si-Si bond of the silane compound is inserted into the Si-Si bond of the main chain to thereby form a Si-C bond.

II-2. A resin composition according to Item II-1 obtainable by heating the mixture comprising a silane compound and an epoxy compound in an inert gas atmosphere, the composition containing a Si-C bond formed by insertion of carbon in the side chain of the Si-Si bond of the silane compound into the Si-Si bond of the main chain; in which composition the silane compound and epoxy compound are bonded to each other at their modified portions via a Si-C bond and/or Si-O bond.

II-3. A resin composition according to Item II-1 obtainable by heating the mixture comprising a silane compound and an epoxy compound in an oxygen-containing atmosphere, the composition containing a Si-C bond formed by insertion of carbon in the side chain of the Si-Si bond of the silane compound into the Si-Si bond of the main chain, and/or a Si-O bond formed by insertion of oxygen in the atmosphere into the Si-Si bond of the main chain; in which composition the silane compound and epoxy compound are bonded to each other at their modified portions via a Si-C bond and/or a Si-O bond, and/or a Si-O-C bond formed by insertion of oxygen in the atmosphere.

II-4. A resin composition according to any one of Items II-1 to II-3 wherein the silane compound is a polysilane.

II-5. A resin composition according to Item II-4 wherein the polysilane has network structure.

II-6. A resin composition according to any one of Items II-1 to II-5 obtainable by heating the mixture at 220°C or above.

II-7. A process for producing a resin composition, the process comprising the steps of mixing an epoxy compound and a Si-Si bond-containing silane compound, heating the mixture at a temperature not lower than the temperature at which carbon in the side chain of the Si-Si bond of the silane compound is inserted into the Si-Si bond of the main chain to thereby form a Si-C bond.

II-8. A formed article of a resin composition according to any one of Items II-1 to II-6 comprising a Si-Si bond-containing silane compound and an epoxy compound.

II-9. A formed article according to Item II-8 which is in the form of a coating film.

II-10. A process for producing a product or article having a coating film, the process comprising the steps of applying a mixture comprising a Si-Si bond-containing silane compound and an epoxy compound to a substrate surface to obtain a coating, and curing the coating by heating at a temperature not lower than the temperature at which carbon in the side chain of the Si-Si bond of the silane compound is inserted into the Si-Si bond of the main chain to thereby form a Si-C bond.

II-11. A process according to Item II-10 wherein the silane compound is a polysilane having network structure.

II-12. A product or article having a cured coating film, the product or article being obtainable by a process according to Item II-10 or II-11.

II-13. A product or article according to Item II-12 wherein the cured coating film is a heat-resistant, corrosion-resistant, flame-retardant surface protective film.

II-14. A product or article according to Item II-10 wherein the cured coating film is an interlayer electrical insulating film.

The silane compound for use in the production of the resin composition of the second invention is a linear, cyclic or branched compound having a Si-Si bond, and basically the same as the silane compound used in the first invention, provided that, in the structural formulas (1), (2) and (3), at least one of the R's is an alkyl, alkenyl, arylalkyl or aryl group.

Like in the first invention, polysilanes having network structure represented by the formula (2) or (3) are preferred as the silane compound.

The epoxy compound for use in the second invention may be the same as in the first invention.

In the production of the resin composition according to the second invention, the ratio of the silane compound and epoxy compound in the mixture may be the same as in the first invention.

A curing agent for the mixture can be used also in the second invention. Usable curing agents are the same as in the first invention. The curing agent, when employed, is used in a proportion of usually about 0.01 to 50 parts by weight, preferably about 0.1 to 20 parts by weight, per 100 parts by weight of the silane compound.

In the production of the resin composition of the second invention, the temperature for heating the mixture is not limited, on condition that it is not lower than the temperature at which carbon in the side chain of the Si-Si bond of the silane compound is inserted into the Si-Si bond of the main chain to thereby form a Si-C bond. The heating temperature is usually about 180 to 450° C, preferably about 200 to 400° C, more preferably about 220 to 350° C.

The mixture is maintained at the above heating temperature for about 1 minute to 48 hours, preferably about 3 minutes to 24 hours, more preferably about 5 minutes to 18 hours. The heating rate is not limited but is preferably about 0.1 to 10° C/min.

The mixture may be preliminarily heated at a temperature lower than 180° C to remove the volatile content or to allow the curing reaction to proceed to a certain degree, before being heated under the above heating conditions.

The heating can be carried out in an atmosphere of an inert gas such as nitrogen or argon, or in an oxygen-containing atmosphere such as air.

According to the second invention, when the mixture of the silane compound and epoxy compound is heated at the above specified temperature in an inert gas atmosphere, carbon in the side chain of the Si-Si bond of the silane compound is inserted into the Si-Si bond of the main chain to thereby form a Si-C bond, which improves the heat resistance of the resin composition. Further, as shown in the following reaction schemes (I) and (II), the modified silane compound component and modified epoxy compound component are bonded to each other via a Si-C bond and/or Si-O bond formed between at least one silicon atom in the Si-Si bond of the silane compound component or in the Si-C bond formed by the modification, and at least one carbon atom and/or oxygen atom in the epoxy group modified by the ring-opening of the epoxy compound component.

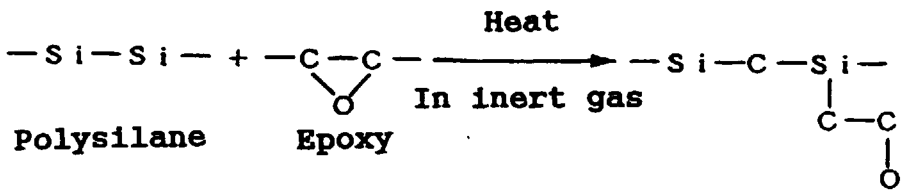


(I)

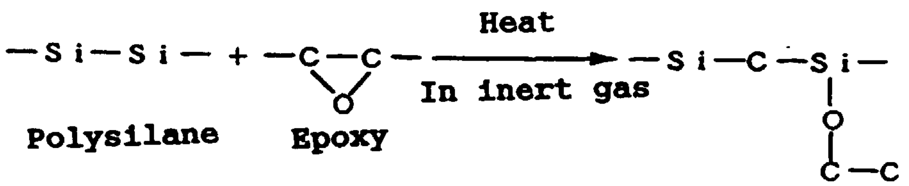


(II)

When the mixture is heated in an oxygen-containing gas atmosphere, carbon in the side chain of the Si-Si bond of the silane compound is inserted into the Si-Si bond of the main chain to thereby form a Si-C bond, and/or oxygen in the atmosphere is inserted into the Si-Si bond of the main chain to thereby form a Si-O-Si bond. Further, as shown in the following reaction schemes (III) and (IV), the modified silane compound component and modified epoxy compound component are bonded to each other via a Si-C bond and/or Si-O bond formed between at least one silicon atom in the Si-Si bond of the silane compound component or in the Si-C bond formed by the modification, and at least one carbon atom and/or oxygen atom in the epoxy group modified by the ring-opening of the epoxy compound component. Further, as shown in the following reaction scheme (V), the modified silane compound component and modified epoxy compound component may be bonded to each other via a Si-O-C bond formed by insertion of oxygen in the atmosphere.

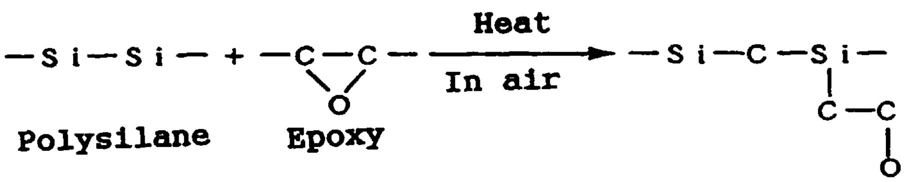


(III)

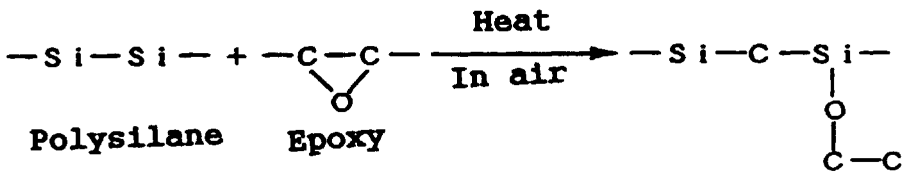


(IV)

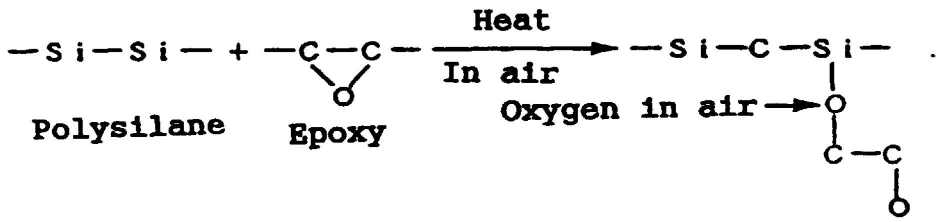


(V)

According to the second invention, the mixture may be irradiated with light before or after or during the heating. Useful light sources, curing agents (photoinitiators), photosensitizers, irradiation conditions are the same as in the first invention.

Like in the first invention, inorganic fillers, flame retardants, releasing agents, pigments, plasticizers. surface modifiers, stress reducing agents, flow modifiers, leveling agents, antifoaming agents, antistatic agents, UV absorbers, dispersing agent and other resin additives may be used in the second invention, where necessary.

These additives may be added in the same manner as in the first invention.

When a formed article is produced using the resin composition of the second invention, the shape of the formed article, forming method, solvent to be used, concentration of the composition in the solution, substrate, etc. are not limited and may be the same as in the first invention.

The resin composition of the second invention, when applied to a substrate and cured, exhibits excellent properties as a protective film, interlayer electrical insulating film or other films for various substrates, like the composition of the first invention.

III. Third invention

The third invention provides the following epoxy resin compositions, formed articles and products or articles having a cured epoxy coating film.

III-1. A resin composition obtainable by subjecting a mixture comprising a Si-Si bond-containing silane compound and an epoxy compound to at least one treatment selected from (1) light irradiation and (2) heating at a temperature not lower than the temperature at which the Si-Si bond of the silane compound is cleaved or a substituent in the side chain of the silane compound is dissociated, the at least one treatment being carried out at a temperature below the temperature at which carbon in the side chain of the Si-Si bond of the silane compound is inserted into the Si-Si bond of the main chain to thereby form a Si-C bond.

III-2. A resin composition according to Item III-1 obtainable by subjecting, in an inert gas atmosphere, a mixture comprising a silane compound and an epoxy compound to light irradiation and/or heating; in which composition the silane compound component and epoxy compound component are bonded to each other at their modified portions via a Si-C bond and/or Si-O bond.

III-3. A resin composition according to Item III-1 obtainable by subjecting, in an oxygen-containing gas atmosphere, a mixture comprising a silane compound and an epoxy compound to light irradiation and/or heating; in which composition at least part of the Si-Si bonds in the main chain of the silane compound component have a Si-O-Si bond formed by insertion of oxygen in the atmosphere; and in which composition the silane compound component and epoxy compound component are bonded to each other at their modified portions via a Si-C bond and/or a Si-O

bond, and/or a Si-O-C bond formed by insertion of oxygen in the atmosphere.

III-4. A resin composition according to any one of Items III-1 to III-3 wherein the silane compound is a polysilane.

III-5. A resin composition according to Item III-4 wherein the polysilane has network structure.

III-6. A resin composition according to any one of Items III-1 to III-5 obtainable by heating the mixture at 150 to 200°C.

III-7. A process for producing a resin composition, the process comprising the steps of mixing an epoxy compound and a Si-Si bond-containing silane compound, and subjecting the mixture to at least one treatment selected from (1) light irradiation and (2) heating at a temperature not lower than the temperature at which the Si-Si bond of the silane compound is cleaved or a substituent in the side chain of the silane compound is dissociated, the at least one treatment being carried out at a temperature below the temperature at which carbon in the side chain of the Si-Si bond of the silane compound is inserted into the Si-Si bond of the main chain to thereby form a Si-C band.

III-8. A formed article of a resin composition according to any one of Items III-1 to III-6 comprising an epoxy compound and a Si-Si bond-containing silane compound.

III-9. A formed article according to Item III-8 which is in the form of a coating film.

III-10. A process for producing a product or article having a cured coating film, the process comprising the steps of applying a mixture comprising an epoxy compound and a Si-Si bond-containing silane compound to a substrate surface to obtain a coating, and subjecting the coating to at least one treatment selected from (1) light irradiation and (2) heating at a temperature not lower than the temperature at which the Si-Si bond of the silane compound is cleaved or a substituent in the side chain of the silane compound is dissociated, the at least one treatment being carried out at a temperature below the temperature at which carbon in the side chain of the Si-Si bond of the silane compound is inserted into the Si-Si bond of the main chain to thereby form a Si-C bond.

III-11. A process for producing a product or article according to Item III-10 wherein the silane compound is a polysilane having network structure.

III-12. A product or article having a cured coating film, the product or article being obtainable by a process according to Item III-10 or III-11.

III-13. A product or article according to Item III-12 wherein the cured coating film is a heat-resistant, corrosion-resistant, flame-retardant surface protective film.

III-14. A product or article according to Item III-12 wherein the cured coating film is an interlayer electrical insulating film.

The silane compound for use in the production of the resin composition of the third invention is a linear, cyclic or branched compound having a Si-Si bond, which may be the same as the silane compound used in the first invention, provided that, in the structural formulas (1), (2) and (3), at least one of the R's is an alkyl, alkenyl, arylalkyl or aryl group.

Like in the first invention, polysilanes with network structure represented by the formula (2) or (3) are preferred as the silane compound.

The epoxy compound for use in the third invention may be the same as in the first invention.

The ratio of the silane compound to the epoxy compound in the mixture for use in the production of the resin composition according to the third invention may be the same as in the first invention.

A curing agent for the mixture can be used in the third invention as well. The curing agent may be the same as in the first invention. The curing agent, when employed, is used in a proportion of usually about 0.01 to 50 parts by weight, preferably about 0.1 to 20 parts by weight, per 100 parts by weight of the silane compound.

In the production of the resin composition of the third invention, the temperature for heating the mixture is not limited on condition that it is lower than the temperature at which carbon in the side chain of the Si-Si bond of the silane compound is inserted into the Si-Si bond of the main chain to thereby form a Si-C bond, but not lower than the temperature at which the Si-Si bond of the silane compound is cleaved or a substituent (R) in the side chain of the silane compound is dissociated. The heating temperature is usually about 100 to 220°C, preferably 150 to 220°C, more preferably 150 to 200°C.

The mixture is maintained at the above specified heating temperature for about 1 minute to 48 hours, preferably about 3 minutes to 24 hours, more preferably about 5 minutes to 18 hours. The heating rate is not limited but is preferably about 0.1 to 10°C/min.

The mixture may be preliminarily heated at a temperature below 180°C to remove the volatile content or to allow the curing reaction to proceed to a certain degree, before being heated under the above conditions.

In the third invention, the mixture may be subjected to light irradiation, instead of or in addition to the heating. The light irradiation, when employed, may be carried out simultaneously with the heating, or before or after the heating. For the light irradiation, useful light sources, curing agents (photoinitiators), photosensitizers and conditions are the same as in the first invention.

Like in the first invention, the mixture can be heated in an atmosphere of an inert gas such as nitrogen or argon, or in an oxygen-containing atmosphere such as air.

When the mixture of the silane compound and epoxy compound is subjected, in an inert gas atmosphere, to heating and/or light irradiation, part or all of the Si-Si bonds in the silane compound component are cleaved so that at least one silicon atom of the silane compound forms a Si-C bond with at least one carbon atom in the epoxy group modified by the ring opening of the epoxy compound, and/or a Si-O bond with at least one oxygen atom in said modified epoxy group, like in the second invention.

When the mixture is heated and/or irradiated with light at the above specified temperature in an oxygen-containing gas atmosphere, a Si-O-C bond may be formed between the modified silane compound component and modified epoxy compound component, like in the second invention, by insertion of oxygen in the atmosphere, in addition to the Si-C bond and Si-O bond formed in the same manner as in the case of using an inert gas atmosphere. Further, although not illustrated, oxygen in the atmosphere may be inserted into part or all of the Si-Si bonds of the silane compound to thereby form Si-O-C bonds.

Like in the first invention, inorganic fillers, flame retardants, releasing agents, pigments, plasticizers, surface modifier, stress reducing agents, flow modifiers, leveling agents, antifoaming agents, antistatic agents, UV absorbers, dispersing agents and other resin additives may be used in the third invention, where necessary.

These additives can be added in the same manner as in the first invention.

When a formed article is produced from the resin composition of the third invention, the shape of the formed article, forming method, solvent to be used, concentration of the composition in the solution, substrate, etc. are not limited and may be the same as in the first invention.

The resin composition of the third invention, when applied to a substrate and cured, exhibits excellent properties as a protective film, interlayer electrical insulating film or other films for various substrates, like the composition of the first invention.

## IV. Fourth invention

The fourth invention provides the following epoxy resin compositions, formed articles, and products or articles having a cured epoxy resin coating film.

IV-1. A resin composition obtainable by subjecting a mixture comprising a polycarbosilane and an epoxy compound to at least one treatment selected from heating and light irradiation.

IV-2. A resin composition according to Item IV-1 obtainable by irradiating with light and/or heating a mixture comprising a polycarbosilane and an epoxy compound in an inert gas atmosphere, the composition containing a Si-C bond derived from the polycarbosilane; in which composition the polycarbosilane component and epoxy compound component are bonded to each other at their modified portions via a Si-C bond and/or Si-O bond.

IV-3. A resin composition according to Item IV-1. obtainable by irradiating with light and/or heating a mixture comprising a polycarbosilane and an epoxy compound in an oxygen-containing gas atmosphere, the composition containing a Si-C bond derived from the polycarbosilane; in which composition the polycarbosilane component and epoxy compound component are bonded to each other at their modified portions via a Si-C bond and/or a Si-O bond. and/or a Si-O-C bond formed by insertion of oxygen in the atmosphere.

IV-4. A resin composition according to any one of Items IV-1, IV-2 and IV-3 wherein the polycarbosilane has a Si-H bond in the side chain.

IV-5. A process for producing a resin composition, the process comprising the steps of mixing an epoxy compound and a polycarbosilane, subjecting the mixture to at least one treatment selected from heating and light irradiation.

IV-6. A formed article of a resin composition according to any one of Items IV-1 to IV-4 comprising a polycarbosilane and an epoxy compound.

IV-7. A formed article according to Item IV-6 which is in the form of a coating film.

IV-8. A process for producing a product or article, the process comprising the steps of applying a mixture comprising a polycarbosilane and an epoxy compound to a substrate surface to obtain a coating, subjecting the coating to at least one treatment selected from heating and light irradiation to thereby cure the coating.

IV-9. A product or article having a cured coating film, the product or article being obtainable by a process according to Item IV-8.

IV-10. A product or article according to Item IV-9 wherein the cured coating film is a heat-resistant, corrosion-resistant, flame-retardant surface protective film.

IV-11. A product or article according to Item IV-9 wherein the cured coating film is an interlayer electrical insulating film.

The fourth invention is similar to the second and third inventions except that a carbosilane compound, in place of the silane compound, is used as a material for producing the resin composition.

The polycarbosilane for use in the production of the resin composition of the fourth invention is not limited as

long as it is a linear, cyclic or branched compound having a Si-C bond. The polycarbosilane may contain, in the molecule, at least one of Si-O bond, Si-N band, Si-O-M bonds (M=Ti or Zr) and Si-B bond.

Examples of such polycarbosilanes include linear, branched or cyclic compounds having a repeating unit represented by the formula (4):

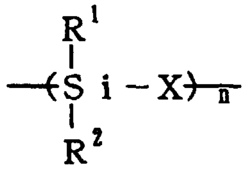 (4)

wherein $R^1$ is a hydrogen atom or an alkyl, alkenyl, arylalkyl, aryl, alkoxyl, hydroxyl, phenolic hydroxyl, amino or silyl group, $R^2$ is an alkyl, alkenyl, arylalkyl, aryl, alkoxyl, hydroxyl, phenolic hydroxyl, amino or silyl group, X is an alkylene group, n is 1 to 10000, $R^1$'s in all the repeating units may be the same or at least two of them may be different from each other, $R^2$'s in all the repeating units may be the same or at least two of them may be different from each other, and X's in all the repeating units may be the same or at least two of them may be different from each other.

Preferred polycarbosilane compounds include those having a reactive group such as Si-H in the side chain.

The polycarbosilane for use in the invention can be prepared by subjecting a corresponding polysilane to heat rearrangement (Kinou Zairyo (Functional Materials), 14, 1981 (1981)), ring-opening polymerization (J. Org. Chem., 30, 2618 (1965)), dechlorination (J. Org. Chem., 29, 1601 (1964)) or like reaction. Polysilanes useful for the heat rearrangement include linear or cyclic polysilanes represented by the formula (5):

$$(R_2Si)_m \qquad (5)$$

wherein R's may be the same or different and each represent a hydrogen atom or an alkyl, alkenyl, arylalkyl, aryl, alkoxyl, hydroxyl, phenyl or amino group, at least one of R's is an alkyl, alkenyl, arylalkyl, aryl or phenyl group, and m is 2 to 1000.

Epoxy compounds usable in the fourth invention are the same as in the first invention.

In the mixture comprising the polycarbosilane and epoxy compound (hereinafter sometimes referred to simply as "mixture") for use in the production of the resin composition of the fourth invention, the ratio of the polycarbosilane to the epoxy compound is about 0.01 to 100 parts by weight, preferably about 0.05 to 20 parts by weight, more preferably about 0.1 to 10 parts by weight of the polycarbosilane, to 1 part by weight of the epoxy compound.

For producing the resin composition of the fourth invention, the mixture is heated usually at about 40 to 450°C, preferably at about 100 to 400°C, more preferably at about 150 to 400°C, particularly preferably at about 220 to 400°C. The heating time is about 1 minute to 48 hours, preferably about 3 minutes to 24 hours, more preferably about 5 minutes to 18 hours. The heating rate is not limited but is preferably about 0.1 to 10°C/min. The mixture is heated in an atmosphere of inert gas such as nitrogen or argon, or an oxygen-containing gas such as air.

A curing agent for the mixture can be used also in the fourth invention. Usable curing agents are the same as in the first invention. The amount of the curing agent to be used may be the same as in the second invention.

The mixture may be subjected to light irradiation instead of or in addition to the heating. The light irradiation, when employed, may be carried out simultaneously with the heating, or before or after the heating. Usable light sources, curing agents (photoinitiators), photosensitizers, conditions for light irradiation are the same as in the first invention.

The mixture can be preliminarily heated at a temperature below 100°C to thereby remove the volatile content or to allow the curing reaction to proceed to a certain degree, before being subjected to the heating and/or light irradiation.

When the mixture comprising the polycarbosilane compound and epoxy compound is subjected, in an inert gas atmosphere, to heating and/or light irradiation, at least one silicon atom in the polycarbosilane forms a Si-C bond with at least one carbon atom in the epoxy group modified by the ring opening of the epoxy compound, and/or a Si-O bond with at least one oxygen atom in said modified epoxy group, as illustrated in the following reaction schemes (VI) and (VII):

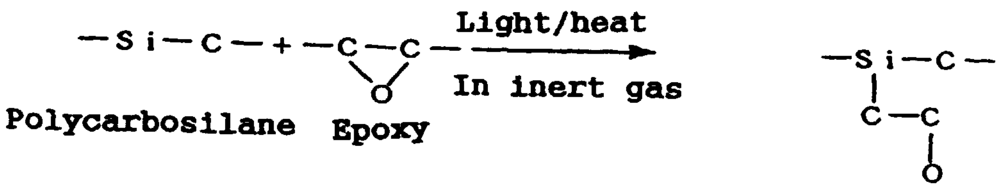


(VI)

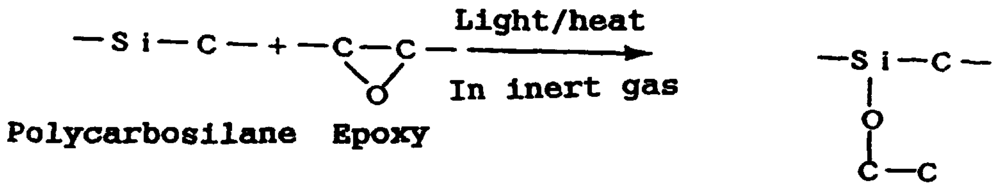


(VII)

When the mixture is subjected, at the above specified temperature and in an oxygen-containing gas atmosphere, to heating and/or light irradiation, a Si-O-C bond may be formed between the polycarbosilane component and modified epoxy compound component, by insertion of oxygen in the atmosphere, as illustrated in the following reaction scheme (X), in addition to the Si-C bond and Si-O bond formed in the above manner [the reaction schemes (VIII) and (IX)].

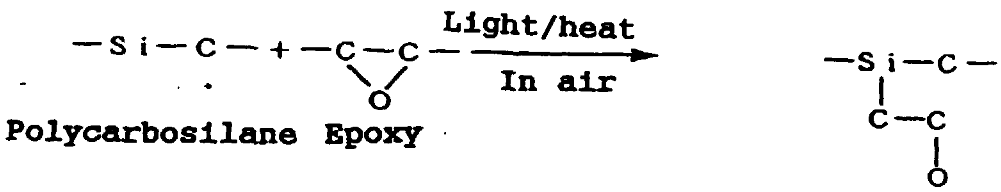


(VIII)

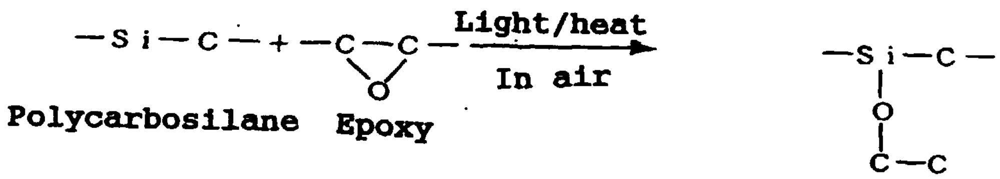


(IX)

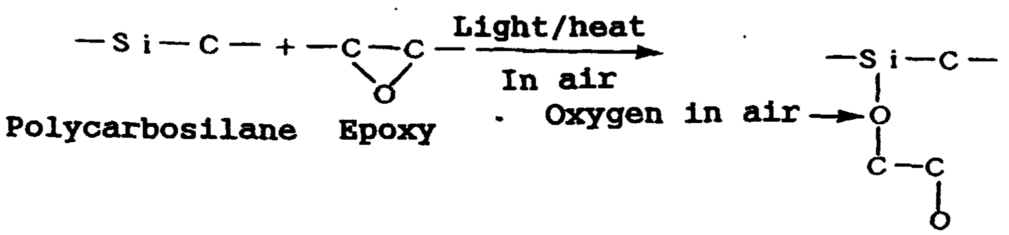


(X)

Like in the first invention, inorganic fillers, flame retardants, releasing agents, pigments, plasticizers, surface modifiers, stress reducing agents, flow modifiers, leveling agents, antifoaming agents, antistatic agents, UV absorbers, dispersing agents and other resin additives may be used in the fourth invention, where necessary.

When a formed article is produced from the resin composition of the fourth invention, the shape of the formed article, forming method, solvent to be used, concentration of the composition in the solution, substrate, etc. are not limited and may be the same as in the first invention.

The resin composition of the fourth invention, when applied to a substrate and cured, exhibits excellent properties as a protective film, interlayer electrical insulating film or other films for various substrates, like the composition of the first invention.

Industrial Applicability

The resin compositions of the present invention and formed articles produced therefrom are excellent in heat resistance, heat cycle resistance, acid resistance, alkali resistance, organic solvent resistance, water resistance, moisture resistance, flame retardancy, UV absorbing properties, water repellency, insulating properties, photosensitivity, film-forming properties, moldability and adhesion to substrates (such as metals, ceramics, glasses and plastics), and has a low dielectric constant.
The articles or products produced by forming on a substrate a coating film of the resin composition of the invention are excellent in performance characteristics such as heat resistance, heat cycle resistance, acid resistance, alkali resistance, organic solvent resistance, water resistance, moisture resistance, flame retardancy, UV absorbing properties, water repellency, insulating properties, interlayer adhesion, etc., even under severe environmental conditions.
In particular, when a polysilane having network structure is used as the silane compound, the resulting formed article is further improved in heat resistance, acid resistance, organic solvent resistance, water resistance, moisture resistance, flame retardancy, water repellency and other properties.
Consequently, the resin compositions and formed articles of the present invention are extremely useful as coating compositions, insulating materials for electric apparatus, coating materials for electric wires, sealing materials for electronic apparatus, interlayer electrical insulating films for printed wiring boards, wiring insulating films, surface protective films, liquid crystal orientating films, slidable members, materials for automotive parts, aerospace materials, inks, binding materials, adhesive materials and other applications for imparting heat resistance, corrosion resistance, flame retardancy and other properties.
The resin compositions of the invention, when cured, are superior to cured epoxy resins in heat resistance, heat cycle resistance, acid resistance, water resistance, moisture resistance, flame retardancy, water repellency and other properties, and are superior to cured silane compounds in processability, moldability, film-forming properties and other properties.
In particular, when the compositions of the invention contain, as the silane compound, a polysilane having network structure, the resulting formed articles are further improved in heat resistance, acid resistance, organic solvent resistance, water resistance, moisture resistance, flame retardancy, water repellency and other properties. Thus, the compositions containing the polysilane shows excellent properties as heat-resistant, corrosion-resistant, flame-retardant coating materials for protecting substrate surfaces.

Best Mode for Carrying Out the Invention

Examples are given below to clarify the features of the present invention in further detail.
In the following description, the first example of the first invention of the present application is indicated as "Example I-1", and other examples concerning the first invention and examples of the second to fourth inventions of this application are likewise indicated.

Example I-1

Dissolved in a solvent mixture of 1 ml of tetrahydrofuran and 4 ml of toluene at room temperature were 0.5 g of a methylphenylpolysilane (average polymerization degree: 40) synthesized by an electrode reaction, as a silane compound, 0.5 g of a bisphenol A epoxy resin (a product of Asahi-Ciba Ltd.; Araldite AER260) as an epoxy compound, and 0.14 g of diethylene triamine as a curing agent, followed by mixing. The resulting mixture was applied by flow coating to a stainless steel plate (SUS-304), copper plate (C-1100) and aluminum plate (A1050P), each polished with sandpaper (#500) in advance.
The coated stainless steel plate, copper plate and aluminum plate were heated in air at 100°C for 30 minutes to form cured coating films, giving three types of samples. The films formed were each 20 μm thick.
Tests were performed to compare the properties of the films of the present invention obtained above with those of coating films prepared from a bisphenol A epoxy resin without using a silane compound. The tests revealed that the films of the present invention are low in dielectric constant and hygroscopicity and excellent in flame retardancy, heat resistance and adhesion to the substrates, and thus remarkably improved in properties as materials for insulating parts of semiconductors or for surface protective layers for substrates.
Further, an aluminum upper electrode was formed on each of the above obtained films by the vacuum deposition method to prepare a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example I-2

The procedure of Example I-1 was followed except for using 0.8 g of a methylphenylpolysilane (average polymerization degree: 40) as a silane compound, and 0.2 g of a bisphenol A epoxy resin (a product of Asahi-Ciba Ltd.; Araldite AER260) as an epoxy compound, giving three types of samples.
Tests were performed to compare the properties of the above obtained films of the present invention with those of coating films prepared from a bisphenol A epoxy resin without using a silane compound. The tests revealed that the films of the present invention are low in dielectric constant and hygroscopicity and high in flame retardancy, heat resistance and adhesion to the substrates, and thus remarkably improved in properties as materials for insulating parts of semiconductors or for surface protective layers for substrates.
Further, an aluminum upper electrode was formed on each of the above obtained films by the vacuum deposition method to prepare a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example I-3

The procedure of Example I-1 was followed except for using a phenyl network polysilane (average polymerization degree: 40) as a silane compound, giving three types of samples.
Tests were performed to compare the properties of the above obtained films of the present invention with those of coating films prepared from a bisphenol A epoxy resin without using a silane compound. The tests revealed that the films of the invention was low in dielectric constant and hygroscopicity and high in flame retardancy, heat resistance and adhesion to the substrates, and thus remarkably improved in properties as materials for insulating parts of semiconductors or for surface protective layers for substrates.

Example I-4

The procedure of Example I-1 was followed except for using 0.2 g of a novolac epoxy resin (a product of Asahi-Ciba Ltd.; EPN1180) as an epoxy compound, 0.8 g of a methylphenylpolysilane (average polymerization degree: 40) as a silane compound and 0.4 g of trimellitic anhydride as a curing agent, giving three types of samples.
Tests were performed to compare the properties of the above obtained films of the present invention with those of coating films prepared front the novolac epoxy resin without using a silane compound. The tests revealed that the films of the present invention are low in dielectric constant and hygroscopicity and high in flame retardancy, heat resistance and adhesion to the substrates, and thus remarkably improved in properties as materials for insulating parts of semiconductors or for surface protective layers for substrates.

Example II-1

A cylindrical container made of stainless steel was charged with a mixture of 0.2 g of methylphenyl-polysilane (average polymerization degree: 40) synthesized by an electrode reaction, as a silane compound, and 0.8 g of a bisphenol A epoxy resin (a product of Asahi-Ciba Ltd.; Araldite AER260) as an epoxy compound. The mixture was heated in an argon atmosphere from room temperature to 300°C at a rate of 10°C/min. After being reached 300°C, the mixture was cooled to room temperature and made into pellets.
NMR analysis of the structure of the obtained pellets was carried out. Figs. 1 and 2 show the results of $^{29}$Si-NMR analysis and $^{13}$C-NMR analysis. The $^{29}$Si-NMR analysis revealed peaks at -40 ppm, -20 ppm and 0 ppm. The $^{13}$C-NMR analysis revealed a new peak at 0 ppm.
The heat resistance, acid resistance, alkali resistance and heat cycle resistance and combustibility of the pellets were tested.
The heat resistance was tested by allowing the pellets to stand in an air atmosphere in an electric furnace at 450°C for 1 hour. The surface conditions of the pellets were inspected with the unaided eye and with an electron microscope (SEM). No cracks were observed, demonstrating that the pellets had a good heat resistance.
The acid resistance was tested by immersing the pellets in a 5% aqueous solution of nitric acid for 2 hours, followed by visual inspection of the surface conditions of the pellets. No cracks were observed, demonstrating that the pellets had a good acid resistance.
The alkali resistance was tested by immersing the pellets in a 5% aqueous solution of NaOH for 2 hours, followed by visual inspection of the surface conditions of the pellets. No cracks were observed, showing that the pellets had a good alkali resistance.

The heat cycle resistance was tested by repeating 10 times a cycle consisting of maintaining the pellets at a predetermined temperature (400°C) for 2 hours and maintaining them at room temperature for 2 hours, so as to give a thermal shock to the pellets. Thereafter, the surface conditions of the pellets were visually inspected. No cracks were observed, demonstrating that the pellets had a good heat cycle resistance.

The combustibility was tested by allowing the pellets to stand in the flame of a Bunsen burner for 1 minute, followed by visual inspection for burning of the pellets. No burning was observed, showing that the resin composition of the present invention is a highly flame-retardant material.

Example II-2

Dissolved in 10 ml of tetrahydrofuran at room temperature were 0.5 g of a methylphenylpolysilane (average polymerization degree: 40) synthesized by an electrode reaction, as a silane compound, and 0.5 g of a bisphenol A epoxy resin (a product of Asahi-Ciba Ltd.; Araldite AER260) as an epoxy compound, followed by mixing. The resulting mixture was applied by flow coating to a stainless steel plate (SUS-304) polished by sandpaper (#500) in advance.

The coated stainless steel plate was heated in an argon atmosphere from room temperature to 300°C at a rate of 10°C/min. When reached 300°C, the plate was placed in an atmosphere at room temperature, giving a sample having a cured coating film. The cured coating film was 20 µm thick.

Using the obtained sample, the heat resistance, acid resistance, alkali resistance, heat cycle resistance, combustibility and electric properties of the coating film were tested.

The heat resistance was tested by allowing the sample in an air atmosphere in an electric furnace at 450°C for 1 hour. The surface conditions of the coating film were inspected with the unaided eye and with an electron microscope (SEM). No cracks, voids, peeling or other defects were observed, showing that the coating film had a good heat resistance.

The acid resistance was tested by immersing the sample in a 5% aqueous solution of nitric acid for 2 hours, followed by visual inspection of the surface conditions of the coating film. No cracks, voids, peeling or other defects were observed, demonstrating that the coating film had a good acid resistance.

The alkali resistance was tested by immersing the sample in a 5% aqueous solution of NaOH for 2 hours, followed by visual inspection of the surface conditions of the coating film. No cracks, voids, peeling or other defects were observed, demonstrating that the coating film had a good alkali resistance.

The heat cycle resistance was tested by repeating the cycle described in Example II-1 ten times so as to give a thermal shock to the coating film. The surface conditions of the coating film were visually inspected. No cracks, voids, peeling or other defects were observed, showing that the coating film had a good heat cycle resistance.

The combustibility was tested by allowing the coating film to stand in the flame of a Bunsen burner for 1 minute, followed by visual inspection for burning of the coating film. No burning was observed, showing that the resin composition of the invention is a highly flame-retardant material.

For testing the electric properties of the coating film, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example II-3

The procedure of Example II-2 was followed except that the heating was carried out at 250°C, to thereby form a coating film on a stainless steel plate. Using the obtained sample, heat resistance, acid resistance, alkali resistance and heat cycle resistance of the coating film were tested. After each test, the surface conditions of the coating film were visually inspected. No cracks, voids, peeling or other defects were observed, demonstrating that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example II-4

The procedure of Example II-2 was followed except for using 0.5 g of a methylphenylpolysilane (average polymerization degree: 40) as a silane compound and 0.5 g of a novolac epoxy resin (a product of Asahi-Ciba Ltd.; EPN

1180) as an epoxy compound, to thereby form a coating film on a stainless steel plate. Using the obtained sample, the heat resistance, acid resistance, alkali resistance and heat cycle resistance of the coating film were tested. After each test, the surface conditions of the coating film were visually inspected. No cracks, voids, peeling or other defects were observed, demonstrating that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example II-5

The procedure of Example II-2 was followed except for using 0.2 g of cresol novolac epoxy resin (a product of Asahi-Ciba Ltd.; ECN1299) as an epoxy compound, in place of the bisphenol A epoxy resin, and using 0.8 g of a methylphenylpolysilane (average polymerization degree: 40) as a silane compound, to thereby form a coating film on a stainless steel plate. Using the obtained sample, the heat resistance, acid resistance, alkali resistance and heat cycle resistance of the coating film were tested. After each test, the surface conditions of the coating film were visually inspected. No cracks, voids, peeling or other defects were observed, showing that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example II-6

The procedure of Example II-2 was followed except for using 0.5 g of an epoxy-modified silicone resin (a product of Toshiba Silicone Co., Ltd.; XF42-B2249) as an epoxy compound, in place of the bisphenol A epoxy resin, and using 0.5 g of a methylphenylpolysilane (average polymerization degree: 40) as a silane compound, to thereby form a coating film on a stainless steel plate. Using the obtained sample, the heat resistance, acid resistance, alkali resistance and heat cycle resistance of the coating film were tested. After each test, the surface conditions of the coating film were visually inspected. No cracks, voids, peeling or other defects were observed, demonstrating that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity. i.e., had good electric properties as an insulating film.

Example II-7

The procedure of Example II-1 was followed except that the mixture was heated in an air atmosphere, instead of the argon atmosphere, to thereby obtain cured pellets.

IR analysis and NMR analysis of the structure of the pellets were carried out.

In the IR analysis, a high absorption was observed at 1100 $cm^{-1}$, which was attributable to the Si-O bond formed after heating.

The $^{29}$Si-NMR analysis revealed peaks at -40 ppm, -20 ppm and 0 ppm. The $^{13}$C-NMR analysis revealed a new peak at 0 ppm formed after heating.

The heat resistance, acid resistance, alkali resistance and heat cycle resistance of the pellets were tested. After each test, the surface conditions of the pellets were visually inspected. No cracks, voids, peeling or other defects were observed, demonstrating that the pellets were good in the above properties.

The pellets also showed remarkably high flame retardancy.

Example II-8

The procedure of Example II-2 was followed except for using 0.5 g of a novolac epoxy resin (a product of Asahi-Ciba Ltd; EPN1180) as an epoxy compound, in place of the bisphenol A epoxy resin, and using 0.5 g of phenyl network

polysilane (average polymerization degree: 40) as a silane compound, in place of the methylphenylpolysilane, and heating the mixture in an air atmosphere instead of the argon atmosphere, to thereby form a coating film on a stainless steel plate. Using the obtained sample, the heat resistance (at a test temperature of 600°C), acid resistance, alkali resistance and heat cycle resistance of the coating film were tested. After each test, the surface conditions of the coating film were visually inspected. No cracks, voids, peeling or other defects were observed, showing that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example II-9

The procedure of Example II-8 was followed except for using a phenyl network polysilane with an average polymerization degree of 10 as a silane compound, in place of the phenyl network polysilane with an average polymerization degree of 40, to thereby form a coating film on a stainless steel plate. Using the obtained sample, the heat resistance, acid resistance, alkali resistance and heat cycle resistance were tested. After each test, the surface conditions of the coating film were visually inspected. No cracks, voids, peeling or other defects were observed, demonstrating that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example II-10

The procedure of Example II-8 was followed except for using 0.2 g of a novolac epoxy resin (a product of Asahi-Chiba Ltd.; EPN1180) as an epoxy compound, and 0.8 g of a phenyl network polysilane (average polymerization degree: 10) as a silane compound, to thereby form a coating film on a stainless steel plate. Using the obtained sample, the heat resistance, acid resistance, alkali resistance and heat cycle resistance of the coating film were tested. After each test, the surface conditions of the coating film were visually inspected. No cracks, voids, peeling or other defects were observed, showing that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity. i.e., had good electric properties as an insulating film.

Example II-11

The procedure of Example II-8 was followed except for using 0.8 g of a novolac epoxy resin (a product of Asahi-Ciba Ltd.; EPN1180) as an epoxy compound, and using 0.2 g of a phenyl network polysilane (average polymerization degree: 10) as a silane compound, to thereby form a coating film on a stainless steel plate. The heat resistance, acid resistance, alkali resistance and heat cycle resistance of the coating film were tested. After each test, the surface conditions of the coating film were visually inspected. No cracks, voids, peeling or other defects were observed, showing that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity. i.e., had good electric properties as an insulating film.

Example II-12

The procedure of Example II-8 was followed except for using 0.5 g of a methylphenylpolysilane with an average polymerization degree of 40 and 0.5 g of phenyl network polysilane with an average polymerization degree of 10 as

silane compounds, to thereby form a coating film on a stainless steel plate. Using the obtained sample, the heat resistance, acid resistance, alkali resistance and heat cycle resistance of the coating film were tested. After each test, the surface conditions of the coating film were visually inspected. No cracks, voids, peeling or other defects were observed, showing that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example II-13

The procedure of Example II-8 was followed except for using a copolymer (average polymerization degree of 40) of a methylphenylpolysilane and a phenyl network polysilane (in a ratio of 1/1) as a silane compound, in place of the phenyl network polysilane with an average polymerization degree of 40, to thereby form a coating film on a stainless steel plate. Using the obtained sample, the heat resistance, acid resistance, alkali resistance and heat cycle resistance of the coating film were tested. After each test, the surface conditions of the coating film were visually inspected. No cracks, voids, peeling or other defects were observed, showing that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity. i.e., had good electric properties as an insulating film.

Example II-14

The procedure of Example II-8 was followed except that 0.02 g of benzoyl peroxide was added to the mixture of the phenyl network polysilane and novolac epoxy resin, to thereby form a coating film on a stainless steel plate. Using the obtained sample, the heat resistance, acid resistance, alkali resistance and heat cycle resistance of the coating film were tested. After each test, the surface conditions of the coating film were visually inspected. No cracks, voids, peeling or other defects were observed, demonstrating that the coating film was good in the above properties.

The coating film also showed remarkably high flame retardancy.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, showing that the coating film had good electric properties as an insulating film.

Comparative Example II-1

0.2 g of a bisphenol A epoxy resin (Asahi-Ciba Ltd.; Araldite AER260) alone was dissolved in 5 ml of tetrahydrofuran at room temperature. The obtained solution was applied by flow coating to a stainless steel plate (SUS-304) polished with sandpaper (#500) in advance.

The coated stainless steel plate was heated from room temperature to 300°C at a rate of 10°C/min. When reached 300°C, the coated plate was placed in an atmosphere at room temperature, but a cured coating film could not be obtained.

Example III-1

Dissolved in 10 ml of tetrahydrofuran at room temperature were 0.2 g of a methylphenylpolysilane (average polymerization degree:40) synthesized by an electrode reaction, as a silane compound. 0.8 g of a bisphenol A epoxy resin (a product of Asahi-Ciba Ltd.; Araldite AER260) as an epoxy compound, and 0.035 g of N-ethoxy-2-methylpyridinium-hexafluorophosphate (NEMH) as a photoinitiator, followed by mixing. The resulting mixture was applied by flow coating to a stainless steel plate (SUS-304) polished with sandpaper (#500) in advance.

While the coated stainless steel plate was maintained at 50°C, the coating was irradiated with a 100-watt high-pressure mercury lamp placed 15 cm away from the coating, for 5 minutes in an argon atmosphere, giving a sample. The cured coating film of the sample was 20 μm thick.

NMR analysis of the structure of the obtained cured coating film was carried out. The $^{29}$Si-NMR analysis

revealed peaks at -40 ppm and -20 ppm. The $^{13}C$-NMR analysis revealed a new peak at 0 ppm.

Using the sample, the heat resistance, acid resistance, alkali resistance, heat cycle resistance, combustibility and electric properties of the cured coating film were tested.

The heat resistance was tested by allowing the sample in an air atmosphere in an electric furnace at 350°C for 1 hour. The surface conditions of the coating film were inspected with the unaided eye and with an electron microscope (SEM). No cracks were observed, demonstrating that the coating film had a good heat resistance.

The acid resistance was tested by immersing the sample in a 5% aqueous solution of nitric acid for 2 hours, followed by visual inspection of the surface conditions of the coating film. No cracks were observed, demonstrating that the coating film had a good acid resistance.

The alkali resistance was tested by immersing the sample in a 5% aqueous solution of NaOH for 2 hours, followed by visual inspection of the surface conditions of the coating film. No cracks were observed, demonstrating that the sample had a good alkali resistance.

The heat cycle resistance was tested by repeating 10 times a cycle consisting of maintaining the sample at a predetermined temperature (250°C) for 2 hours and maintaining it at room temperature for 2 hours, so as to give a thermal shock to the coating film. The surface conditions of the coating film were visually inspected. No cracks were observed, showing that the coating film had a good heat cycle resistance.

The combustibility was tested by allowing the sample to stand in the flame of a Bunsen burner for 1 minute, followed by visual inspection for burning of the coating film. No burning was observed, showing that the resin composition of the invention is a highly flame-retardant material.

Further, an aluminum upper electrode was formed on the coating film by the vacuum deposition method, giving a laminated structure consisting of conductive layers and a coating layer. Using the laminated structure, the electric properties of the coating film were tested. The test revealed that the coating film was low in relative dielectric constant and dielectric loss tangent and high in electric resistivity, showing that the coating film was good in the above properties as an insulating film.

Example III-2

Dissolved in 10 ml of tetrahydrofuran at room temperature were 0.2 g of a methylphenylpolysilane (average polymerization degree: 40) synthesized by an electrode reaction, as a silane compound, and 0.8 g of a bisphenol A epoxy resin (a product of Asahi-Ciba Ltd.; Araldite AER260) as an epoxy compound, followed by mixing. The resulting mixture was applied by flow coating to a stainless steel plate (SUS-304) polished with sandpaper (#500) in advance.

The coated stainless steel plate was heated in an argon atmosphere from room temperature to 200°C at a rate of 5°C/min. When reached 200°C, the coated plate was placed in an atmosphere at room temperature, giving a sample having a cured coating film. The cured coating film of the sample was 20 μm thick.

NMR analysis of the structure of the obtained cured coating film was carried out. The $^{29}Si$-NMR analysis revealed peaks at -40 ppm and -20 ppm. The $^{13}C$-NMR analysis revealed a new peak at 0 ppm after the heating.

Using the sample, the heat resistance, acid resistance, alkali resistance, heat cycle resistance, combustibility and electric properties of the cured coating film were tested.

The heat resistance was tested by allowing the sample in an air atmosphere in an electric furnace at 350°C for 1 hour. The surface conditions of the coating film were inspected by the unaided eye and with an electron microscope (SEM). No cracks or other defects were observed showing that the coating film had a good heat resistance.

The acid resistance was tested by immersing the sample in a 5% aqueous solution of nitric acid for 2 hours, followed by visual inspection of the surface conditions of the coating film. No cracks or other defects were observed, showing that the coating film had a good acid resistance.

The alkali resistance was tested by immersing the sample in a 5% aqueous solution of NaOH for 2 hours, followed by visual inspection of the surface conditions of the coating film. No cracks or other defects were observed, demonstrating that the coating film had a good alkali resistance.

The heat cycle resistance was tested by repeating 10 times the same heat cycle as in Example III-1 except that the predetermined temperature was 300°C, so as to give a thermal shock to the coating film. The surface conditions of the coating film were visually inspected. No cracks or other defects were observed, demonstrating that the coating film had a good heat cycle resistance.

The combustibility was tested by allowing the coating film to stand in the flame of a Bunsen burner for 1 minute, followed by visual inspection for burning of the coating film. No burning was observed, showing that the resin composition of the invention is a highly flame-retardant material.

Further, an aluminum upper electrode was formed on the coating film by the vacuum deposition method, giving a laminated structure consisting of conductive layers and a coating layer. Using the laminated structure, the electric properties of the coating film were tested. The test revealed that coating film was low in relative dielectric constant and dielectric loss tangent and high in electric resistivity, showing that the coating film was good in the above properties as

an insulating film.

Example III-3

The procedure of Example III-1 was followed except for using 0.2 g of a novolac epoxy resin (a product of Asahi-Ciba Ltd.; EPN1180) as an epoxy compound and 0.8 g of a methylphenylpolysilane (average polymerization degree: 40) as a silane compound, to thereby form a coating film on a stainless steel plate. Using the obtained sample, the heat resistance, acid resistance, alkali resistance and heat cycle resistance of the coating film were tested. After each test, the surface conditions of the coating film were visually inspected. No cracks, voids, peeling or other defects were observed, demonstrating that the coating film was good in the above properties.
Using the sample, the flame retardancy of the coating film was tested in the same manner as in Example III-2. No burning of the coating film was observed, demonstrating that the resin composition of the invention is a flame-retardant material.
Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity. i.e., had good electric properties as an insulating film.

Example III-4

The procedure of Example III-1 was followed except for using 0.5 g of a methylphenylpolysilane (average polymerization degree: 40) as a silane compound and 0.5 g of a novolac epoxy resin (a product of Asahi-Ciba Ltd.; EPN1180) as an epoxy compound, to thereby form a coating film on a stainless steel plate. Using the obtained sample, the heat resistance, acid resistance, alkali resistance and heat cycle resistance of the coating film were tested. After each test, the surface conditions of the coating film were visually inspected. No cracks. voids, peeling or other defects were observed, showing that the coating film was good in the above properties.
Using the sample, the flame retardancy of the coating film was tested in the same manner as in Example III-2. No burning of the coating film was observed, showing that the resin composition of the invention is a flame-retardant material.
Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example III-5

The procedure of Example III-1 was followed except for using 0.2 g of a methylphenylpolysilane (average polymerization degree: 40) as a silane compound and using 0.8 g of a novolac epoxy resin (a product of Asahi-Ciba Ltd.; EPN1180) as an epoxy compound, to thereby form a coating film on a stainless steel plate. Using the obtained sample, the heat resistance, acid resistance, alkali resistance and heat cycle resistance of the coating film were tested by the above test methods. After each test, the surface conditions of the coating film were visually inspected. No cracks, voids, peeling or other defects were observed, showing that the coating film was good in the above properties.
Using the sample, the flame retardancy of the coating film was tested in the same manner as in Example III-2. No burning of the coating film was observed, showing that the resin composition of the invention is a flame-retardant material.
Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example III-6

The procedure of Example III-1 was followed except that the light irradiation of the mixture was performed in an air atmosphere, instead of the argon atmosphere, to thereby form a cured coating film on a stainless steel plate.
IR analysis and NMR analysis of the structure of the obtained coating film were carried out.
In the IR analysis, a high absorption was observed at 1100 $cm^{-1}$, which was attributable to the light irradiation.
The $^{29}$Si-NMR analysis revealed peaks at -40 ppm and -20 ppm. The $^{13}$C-NMR analysis revealed a new peak at 0 ppm after the light irradiation.

The heat resistance, acid resistance, alkali resistance and heat cycle resistance of the coating film were tested. After each test, the coating film was visually inspected. No cracks, voids, peeling or other defects were observed, showing that the coating film was good in the above properties.

The flame retardancy of the coating film was tested in the same manner as in Example III-2. No burning of the coating film was observed, demonstrating that the resin composition of the invention is a flame-retardant material.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example III-7

The procedure of Example III-2 was followed except that the mixture was heated in an air atmosphere, instead of the argon atmosphere, to thereby form a coating film on a stainless steel plate.

IR analysis and NMR analysis of the structure of the obtained cured coating film were carried out.

In the IR analysis, a high absorption was observed at 1100 $cm^{-1}$, which was attributable to the heating.

The $^{29}Si$-NMR analysis revealed peaks at -40 ppm and -20 ppm. The $^{13}C$-NMR analysis revealed a new peak at 0 ppm after the heating.

The heat resistance, acid resistance, alkali resistance and heat cycle resistance of the coating film were tested. After each test, the coating film was visually inspected. No cracks, voids, peeling or other defects were observed, indicating that the coating film was good in the above properties.

The flame retardancy of the coating film was tested in the same manner as in Example III-2. No burning of the coating film was observed, showing that the resin composition of the invention is a flame-retardant material.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example III-8

The procedure of Example III-6 was followed except for using 0.5 g of a novolac epoxy resin (Asahi-Ciba Ltd.; EPN1180) as an epoxy compound and 0.5 g of a phenyl network polysilane (average polymerization degree: 10) as a silane compound, to thereby form a cured coating film on a stainless steel plate. Using the obtained sample, the heat resistance (at a test temperature of 500°C), acid resistance, alkali resistance and heat cycle resistance of the coating film were tested. After each test, the coating film was visually inspected. No cracks, voids, peeling or other defects were observed, showing that the coating film was good in the above properties.

The flame retardancy of the coating film was tested in the same manner as in Example III-2. No burning of the coating film was observed, demonstrating that the resin composition of the invention is a flame-retardant material.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example III-9

The procedure of Example III-2 was followed except for using 0.5 g of a phenyl network polysilane (average polymerization degree: 10) as a silane compound, and 0.5 g of a novolac epoxy resin (a product of Asahi-Ciba Ltd.; EPN 1180) as an epoxy compound, and adding 0.02 g of benzoyl peroxide to the mixture of the silane compound and epoxy compound, and performing the heating at 150°C, to thereby form a coating film on a stainless steel plate. Using the obtained sample, the heat resistance (at a test temperature of 500°C), acid resistance, alkali resistance and heat cycle resistance of the coating film were tested. After each test, the coating film was visually inspected. No cracks, voids, peeling or other defects were observed, showing that the coating film was good in the above properties.

The flame retardancy of the coating film was tested in the same manner as in Example III-2. No burning of the coating film was observed, demonstrating that the resin composition of the invention is a flame-retardant material.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example III-10

The procedure of Example III-6 was followed except for using 0.3 g of a methylphenylpolysilane (average polymerization degree: 40) as a silane compound, 0.7 g of an alicyclic epoxy resin (a product of Daicel Chemical Co., Ltd.; Celloxide 2021p) as an epoxy compound and 10 ml of dimethoxyethane as a solvent, to thereby form a coating film on a stainless steel plate. Using the obtained sample, the heat resistance, acid resistance, alkali resistance and heat cycle resistance of the coating film were tested. After each test, the coating film was visually inspected. No cracks, voids, peeling or other defects were observed, showing that the coating film was good in the above properties.
Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example III-11

The procedure of Example III-1 was followed except for using a ferrocen photoinitiator (a product of Ciba Specialty Chemicals K.K.; Irgacure 261) as a photoinitiator, to thereby form a coating film on a stainless steel plate. Using the obtained sample, the heat resistance, acid resistance, alkali resistance and heat cycle resistance of the coating film were tested. After each test, the coating film was visually inspected. No cracks, voids, peeling or other defects were not observed, showing that the coating film was good in the above properties.
Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, demonstrating that the coating film had good electric properties as an insulating film.

Comparative Example III-1

Dissolved in 5 ml of tetrahydrofuran at room temperature were 0.2 g of a bisphenol A epoxy resin (a product of Asahi-Ciba Ltd.; Araldite AER 260) and 0.035 g of NEMH. The resulting solution was applied by flow coating to a stainless steel plate (SUS-304) polished with sandpaper (#500) in advance.
While the coated stainless steel plate was maintained at 50°C, the coating film was irradiated with a 100-watt high-pressure mercury lamp placed 15 cm away from the coating film, for 5 minutes in an argon atmosphere, giving a sample. The cured coating film of the sample was 20 μm thick.
The sample was allowed to stand in an air atmosphere in an electric furnace at 350°C for 1 hour. As a result, cracks were made on the film surface.

Comparative Example III-2

Dissolved in 5 ml of tetrahydrofuran at room temperature were 0.5 g of a bisphenol A epoxy resin (a product of Asahi-Ciba Ltd.; Araldite AER260) and 0.14 g of diethylene triamine. The resulting solution was applied by flow coating to a stainless steel plate (SUS-304) polished with sandpaper (#500) in advance.
The coated stainless steel plate was heated in air at 100°C for 30 minutes, giving a cured coating film having a thickness of 20 μm.
The obtained sample was allowed to stand in an air atmosphere in an electric furnace at 350°C for 1 hour. As a result, cracks were made on the film surface, and peeling was observed between the coating film and stainless steel plate.

Example IV-1

A cylindrical container made of stainless steel was charged with a mixture of 0.2 g of a polycarbosilane prepared by heat rearrangement (in an argon atmosphere, 450°C) of a methylphenylpolysilane (average polymerization degree: 40) synthesized by an electrode reaction, and 0.8 g of a bisphenol A epoxy resin (a product of Asahi-Ciba Ltd.; Araldite AER260) as an epoxy compound. The mixture was heated in an argon atmosphere from room temperature to 300°C at a rate of 10°C/min. When reached 300°C, the mixture was cooled to room temperature and made into pellets.
NMR analysis of the structure of the obtained pellets was carried out. The $^{29}$Si-NMR analysis revealed a peak at 0 ppm. The $^{13}$C-NMR analysis revealed a peak at 0 ppm.
The heat resistance, acid resistance, alkali resistance and heat cycle resistance and combustibility of the pellets were tested.

The heat resistance was tested by allowing the pellets to stand in an air atmosphere in an electric furnace at 600°C for 1 hour. Then, the surface conditions of the pellets were inspected with the unaided eye and with an electron microscope (SEM). No cracks were observed, showing that the pellets had a good heat resistance.

The acid resistance was tested by immersing the pellets in a 5% aqueous solution of nitric acid for 2 hours, followed by visual inspection of the surface conditions of the pellets. No cracks were observed, showing that the pellets had a good acid resistance.

The alkali resistance was tested by immersing the pellets in a 5% aqueous solution of NaOH for 2 hours, followed by visual inspection of the surface conditions. No cracks were observed, demonstrating that the pellets had a good alkali resistance.

The heat cycle resistance was tested by repeating 10 times a cycle consisting of maintaining the pellets at a predetermined temperature (500°C) for 2 hours and maintaining it at room temperature for 2 hours, so as to give a thermal shock to the sample. Thereafter, the surface conditions were visually inspected. No cracks were observed, showing that the pellets had a good heat cycle resistance.

The combustibility was tested by allowing the pellets to stand in the flame of a Bunsen burner for 1 minute, followed by visual inspection for burning. No burning was observed, showing that the resin composition of the invention is a highly flame-retardant material.

Example IV-2

Dissolved in 10 ml of tetrahydrofuran at room temperature were 0.5 g of a polycarbosilane prepared by heat rearrangement (in an argon atmosphere, 450°C) of a methylphenylpolysilane (average polymerization degree: 40) and 0.5 g of a bisphenol A epoxy resin (a product of Asahi-Ciba Ltd.; Araldite AER260) as an epoxy compound, followed by mixing. The resulting mixture was applied by flow coating to a stainless steel plate (SUS-304) polished with sandpaper (#500) in advance.

The coated stainless steel plate was heated in an argon atmosphere from room temperature to 300°C at a rate of 10°C/min. When reached 300°C, the coated plate was placed in an atmosphere at room temperature, giving a sample having a cured coating film. The cured coating film of the sample was 20 μm thick.

Using the obtained sample, the heat resistance, acid resistance, alkali resistance and heat cycle resistance, combustibility and electric properties of the coating film were tested.

The heat resistance was tested by allowing the sample to stand in an air atmosphere in an electric furnace at 600°C for 1 hour. Thereafter, the surface conditions of the coating film were inspected with the unaided eye and with an electron microscope (SEM). No cracks, voids, peeling or other defects were observed, showing that the coating film had a good heat resistance.

The acid resistance was tested by immersing the sample in a 5% aqueous solution of nitric acid for 2 hours, followed by visual inspection of the surface conditions of the coating film. No cracks, voids, peeling or other defects were observed, demonstrating that the coating film had a good acid resistance.

The alkali resistance was tested by immersing the sample in a 5% aqueous solution of NaOH for 2 hours, followed by visual inspection of the surface conditions of the coating film. No cracks, voids, peeling or other defects were observed, showing that the coating film had a good alkali resistance.

The heat cycle resistance was tested by repeating 10 times a cycle consisting of maintaining the coating film at a predetermined temperature (500°C) for 2 hours and maintaining it at room temperature for 2 hours, so as to give a thermal shock to the sample. Thereafter, the surface conditions of the coating film were visually inspected. No cracks, voids, peeling or other defects were observed, showing that the coating film had a good heat cycle resistance.

The combustibility was tested by allowing the coating film to stand in the flame of a Bunsen burner for 1 minute, followed by visual inspection for burning of the coating film. No burning was observed, demonstrating that the resin composition of the invention is a highly flame-retardant material.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example IV-3

The procedure of Example IV-2 was followed except for using 0.5 g of a polycarbosilane prepared by heat rearrangement (in an argon atmosphere, 450°C) of a methylphenylpolysilane (average polymerization degree: 40) as a polycarbosilane, and 0.5 g of a novolac epoxy resin (a product of Asahi-Ciba Ltd.; EPN1180) as an epoxy compound, giving a sample comprising a stainless steel plate and a cured coating film formed thereon. Using the sample, the heat

resistance, acid resistance, alkali resistance and heat cycle resistance of the cured coating film were tested in the same manner as in Example IV-2.

After each test, the surface of the coating film was visually inspected. No cracks, voids, peeling or other defects were observed, showing that the coating film was good in the above properties.

The combustibility of the coating film was tested in the same manner as in Example IV-2. No burning was observed, demonstrating that the resin composition of the invention is a flame-retardant material.

Further, an aluminum upper electrode was formed on the coating film by the vacuum deposition method, giving a laminated structure consisting of conductive layers and a coating layer. Using the laminated structure, the electric properties of the coating film were tested. The tests revealed that the coating film was low in relative dielectric constant and dielectric loss tangent and high in electric resistivity, i.e., had good electric properties as an insulating film.

Example IV-4

The procedure of Example IV-1 was followed except that the mixture of the polycarbosilane and bisphenol A epoxy resin was heated in an air atmosphere, giving pellets.

IR analysis and NMR analysis of the structure of the pellets were carried out.

The IR analysis showed a high absorption at 1100 $cm^{-1}$, which was attributable to the Si-O bond formed by the heating. The $^{29}$Si-NMR analysis revealed a peak at 0 ppm. The $^{13}$C-NMR analysis revealed a new peak at 0 ppm.

The heat resistance, acid resistance, alkali resistance and heat cycle resistance of the pellets were tested in the same manner as in Example IV-1.

After each test, the surface conditions of the pellets were visually inspected. No cracks, voids or other defects were observed, showing that the pellets were good in the above properties.

The flame retardancy of the pellets was tested in the same manner as in Example IV-1. No burning was observed, showing that the resin composition of the invention is a flame-retardant material.

Example IV-5

The procedure of Example IV-2 was repeated except that the coating formed by applying the mixture of the polycarbosilane and bisphanol A epoxy resin to the stainless steel plate was heated in an air atmosphere, giving a sample. IR analysis and NMR analysis of the structure of the coating film were carried out.

The IR analysis showed a high absorption at 1100 $cm^{-1}$, which was attributable to the Si-O bond. The $^{29}$Si-NMR analysis revealed a peak at 0 ppm. The $^{13}$C-NMR analysis revealed a new peak at 0 ppm.

Using the sample, the heat resistance, acid resistance, alkali resistance and heat cycle resistance of the coating film were tested in the same manner as in Example IV-2.

After each test, the surface conditions of the coating film were visually inspected. No cracks, voids or other defects were observed, showing that the coating film was good in the above properties.

The flame retardancy of the coating film was tested in the same manner as in Example IV-2. No burning was observed, demonstrating that the resin composition of the invention is a flame-retardant material.

Example IV-6

The procedure of Example IV-2 was followed except for using a polycarbosilane prepared by heat rearrangement (in an argon atmosphere, 450°C) of a copolymer (average polymerization degree: 40) of a methylphenylpolysilane and a methyl network polysilane in a ratio of 1/1, and heating the mixture in an air atmosphere, giving a sample consisting of a stainless steel plate and a cured coating film formed thereon. Using the sample, the heat resistance, acid resistance, alkali resistance and heat cycle resistance of the cured coating film were tested in the same manner as in Example IV-2.

After each test, the surface conditions of the coating film were visually inspected. No cracks, voids, peeling or other defects were observed, showing that the coating film was good in the above properties.

The flame retardancy of the coating film was tested in the same manner as in Example IV-2. No burning was observed, demonstrating that the resin composition of the invention was a flame-retardant material.

Further, an aluminum upper electrode was formed on the coating film by the vacuum deposition method, giving a laminated structure consisting of conductive layers and a coating layer. Using the laminated structure, the electric properties of the coating film was tested. The tests revealed that the coating film was low in relative dielectric constant and dielectric loss tangent and high in electric resistivity, i.e., had good electric properties as an insulating film.

Comparative Example IV-1

Dissolved in 5 ml of tetrahydrofuran at room temperature was 1.0 g of a polycarbosilane prepared by heat rearrangement (in an argon atmosphere, 450°C) of dimethylpolysilane. The solution was applied by flow coating to a stainless steel plate (SUS-304) polished with sandpaper (#500) in advance.
The coated stainless steel plate was heated from room temperature to 300°C at a rate of 10°C/min. When reached 300°C, the coated plate was placed in an atmosphere at room temperature. As a result, the coating film had cracks and was partially peeled off.

## Claims

1. An epoxy resin composition comprising a Si-Si bond-containing silane compound, an epoxy compound and a curing agent.

2. An epoxy resin composition according to claim 1 wherein the silane compound is a polysilane.

3. An epoxy resin composition according to claim 1 wherein the polysilane has network structure.

4. A cured epoxy resin composition obtainable by curing an epoxy resin composition comprising a Si-Si bond-containing silane compound, an epoxy compound and a curing agent.

5. A cured epoxy resin composition according to claim 4 wherein the silane compound is a polysilane.

6. A cured epoxy resin composition according to claim 5 wherein the polysilane has network structure.

7. A formed article comprising a cured epoxy resin composition according to any one of claims 4 to 6.

8. A formed article according to claim 7 which is in the form of a coating film.

9. A process for producing a product or article having a cured coating film, the process comprising the steps of applying an epoxy resin composition according to any one of claims 1 to 3 to a substrate surface to obtain a coating, and curing the coating.

10. A product or article having a cured coating film, the product or article being obtainable by a process according to claim 9.

11. A product or article according to claim 10 wherein the cured coating film is a surface protective film.

12. A product or article according to claim 11 wherein the surface protective film is a corrosion-resistant protective film, a heat-resistant protective film or a flame-retardant protective film.

13. A product or article according to claim 10 wherein the cured coating film is an interlayer electrical insulating film.

14. A resin composition obtainable by heating a mixture comprising a Si-Si bond-containing silane compound and an epoxy compound, at a temperature not lower than the temperature at which carbon in the side chain of the Si-Si bond of the silane compound is inserted into the Si-Si bond of the main chain to thereby form a Si-C bond.

15. A resin composition according to claim 14 obtainable by heating the mixture comprising a silane compound and an epoxy compound in an inert gas atmosphere, the composition containing a Si-C bond formed by insertion of carbon in the side chain of the Si-Si bond of the silane compound into the Si-Si bond of the main chain; in which composition the silane compound and epoxy compound are bonded to each other at their modified portions via a Si-C bond and/or Si-O bond.

16. A resin composition according to claim 14 obtainable by heating the mixture comprising a silane compound and an epoxy compound in an oxygen-containing atmosphere, the composition containing a Si-C bond formed by insertion of carbon in the side chain of the Si-Si bond of the silane compound into the Si-Si bond of the main chain, and/or a Si-O-Si bond formed by insertion of oxygen in the atmosphere into the Si-Si bond of the main chain; in which composition the silane compound and epoxy compound are bonded to each other at their modified portions via a Si-C

bond and/or a Si-O bond, and/or a Si-O-C bond formed by insertion of oxygen in the atmosphere.

**17.** A resin composition according to any one of claims 14 to 16 wherein the silane compound is a polysilane.

**18.** A resin composition according to claim 17 wherein the polysilane has network structure.

**19.** A resin composition according to any one of claims 14 to 18 wherein the heating is carried out at 220°C or above.

**20.** A process for producing a resin composition, the process comprising the steps of mixing an epoxy compound and a Si-Si bond-containing silane compound, heating the mixture at a temperature not lower than the temperature at which carbon in the side chain of the Si-Si bond of the silane compound is inserted into the Si-Si bond of the main chain to thereby form a Si-C bond.

**21.** A formed article of a resin composition according to any one of claims 14 to 19 comprising a Si-Si bond-containing silane compound and an epoxy compound.

**22.** A formed article according to claim 21 which is in the form of a coating film.

**23.** A process for producing a product or article having a coating film, the process comprising the steps of applying to a substrate surface a mixture comprising a Si-Si bond-containing silane compound and an epoxy compound, and curing the mixture by heating at a temperature not lower than the temperature at which carbon in the side chain of the Si-Si bond of the silane compound is inserted into the Si-Si bond of the main chain to thereby form a Si-C bond.

**24.** A process according to claim 23 wherein the silane compound is a polysilane having network structure.

**25.** A product or article having a cured coating film, the product or article being obtainable by a process according to claim 23 or 24.

**26.** A product or article according to claim 25 wherein the cured coating film is a heat-resistant, corrosion-resistant, flame-retardant surface protective film.

**27.** A product or article according to claim 25 wherein the cured coating film is an interlayer electrical insulating film.

**28.** A resin composition obtainable by subjecting a mixture comprising a Si-Si bond-containing silane compound and an epoxy compound to at least one treatment selected from (1) light irradiation and (2) heating at a temperature not lower than the temperature at which the Si-Si bond of the silane compound is cleaved or a substituent in the side chain of the silane compound is dissociated, the at least one treatment being carried out at a temperature below the temperature at which carbon in the side chain of the Si-Si bond of the silane compound is inserted into the Si-Si bond of the main chain to thereby form a Si-C bond.

**29.** A resin composition according to claim 28 obtainable by subjecting, in an inert gas atmosphere, the mixture comprising a silane compound and an epoxy compound to light irradiation and/or heating; in which composition the silane compound component and epoxy compound component are bonded to each other at their modified portions via a Si-C bond and/or Si-O bond.

**30.** A resin composition according to claim 28 obtainable by subjecting, in an oxygen-containing gas atmosphere, the mixture comprising a silane compound and an epoxy compound to light irradiation and/or heating; in which composition at least part of the Si-Si bonds in the main chain of the silane compound component have a Si-O-Si bond formed by insertion of oxygen in the atmosphere, and the silane compound component and epoxy compound component are bonded to each other at their modified portions via a Si-C bond and/or a Si-O bond, and/or a Si-O-C bond formed by insertion of oxygen in the atmosphere.

**31.** A resin composition according to any one of claims 28 to 30 wherein the silane compound is a polysilane.

**32.** A resin composition according to claim 31 wherein the polysilane has network structure.

**33.** A resin composition according to any one of claims 28 to 32, the composition being obtainable by performing the heating at 150 to 200°C.

**34.** A process for producing a resin composition, the process comprising the steps of mixing an epoxy compound and a Si-Si bond-containing silane compound, and subjecting the mixture to at least one treatment selected from (1) light irradiation and (2) heating at a temperature not lower than the temperature at which the Si-Si bond of the silane compound is cleaved or a substituent in the side chain of the silane compound is dissociated, the at least one treatment being carried out at a temperature below the temperature at which carbon in the side chain of the Si-Si bond of the silane compound is inserted into the Si-Si bond of the main chain to thereby form a Si-C bond.

**35.** A formed article of a resin composition according to any one of claims 28 to 33 comprising an epoxy compound and a Si-Si bond-containing silane compound.

**36.** A formed article according to claim 35 which is in the form of a coating film.

**37.** A process for producing a product or article having a cured coating film, the process comprising the steps of applying a mixture comprising an epoxy compound and a Si-Si bond-containing silane compound to a substrate surface to provide a coating, and subjecting the coating to at least one treatment selected from (1) light irradiation and (2) heating at a temperature not lower than the temperature at which the Si-Si bond of the silane compound is cleaved or a substituent in the side chain of the silane compound is dissociated, the at least one treatment being carried out at a temperature below the temperature at which carbon in the side chain of the Si-Si bond of the silane compound is inserted into the Si-Si bond of the main chain to thereby form a Si-C bond.

**38.** A process according to claim 37 wherein the silane compound is a polysilane having network structure.

**39.** A product or article having a cured coating film, the product or article being obtainable by a process according to claim 37 or 38.

**40.** A product or article according to claim 39 wherein the cured coating film is a heat-resistant, corrosion-resistant, flame-retardant surface protective film.

**41.** A product or article according to claim 39 wherein the cured coating film is an interlayer electrical insulating film.

**42.** A resin composition obtainable by subjecting a mixture comprising a polycarbosilane and an epoxy compound to at least one of heating and light irradiation.

**43.** A resin composition according to claim 42 obtainable by subjecting, in an inert gas atmosphere, the mixture comprising a polycarbosilane and an epoxy compound to light irradiation and/or heating, the composition containing a Si-C bond derived from the polycarbosilane; in which composition the polycarbosilane component and epoxy compound component are bonded to each other at their modified portions via a Si-C bond and/or Si-O bond.

**44.** A resin composition according to claim 42 obtainable by subjecting, in an oxygen-containing gas atmosphere, the mixture comprising a polycarbosilane and an epoxy compound to light irradiation and/or heating, the composition containing a Si-C bond derived from the polycarbosilane; in which composition the polycarbosilane component and epoxy compound component are bonded to each other at their modified portions via a Si-C bond and/or a Si-O bond, and/or a Si-O-C bond formed by insertion of oxygen in the atmosphere.

**45.** A resin composition according to any one of claims 42, 43 and 44 wherein the polycarbosilane is a carbosilane having a Si-H bond in the side chain.

**46.** A process for producing a resin composition, the process comprising the steps of mixing an epoxy compound and a polycarbosilane, and subjecting the mixture to at least one treatment selected from heating and light irradiation.

**47.** A formed article of a resin composition according to any one of claims 42 to 45 comprising a polycarbosilane and an epoxy compound.

**48.** A formed article according to claim 47 which is in the form of a coating film.

**49.** A process for producing a product or article, the process comprising the steps of applying a mixture comprising a polycarbosilane and an epoxy compound to a substrate surface to obtain a coating, and curing the coating by at least one treatment selected from heating and light irradiation.

**50.** A product or article having a cured coating film, the product or article being obtainable by a process according to claim 49.

**51.** A product or article according to claim 50 wherein the cured coating film is a heat-resistant, corrosion-resistant, flame-retardant surface protective film.

**52.** A product or article according to claim 50 wherein the cured coating film is an interlayer electrical insulating film.

Fig. 1

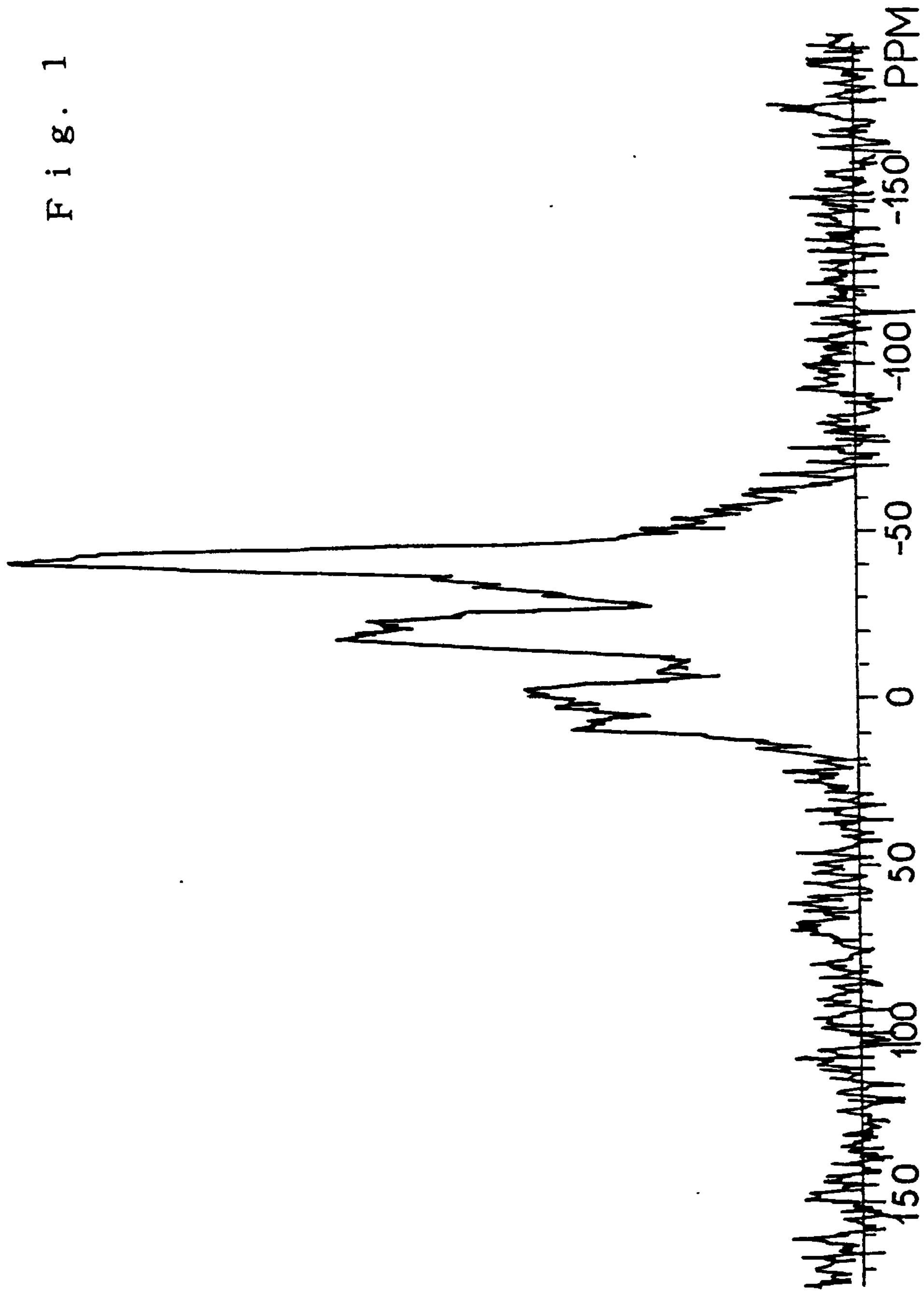

Fig. 2

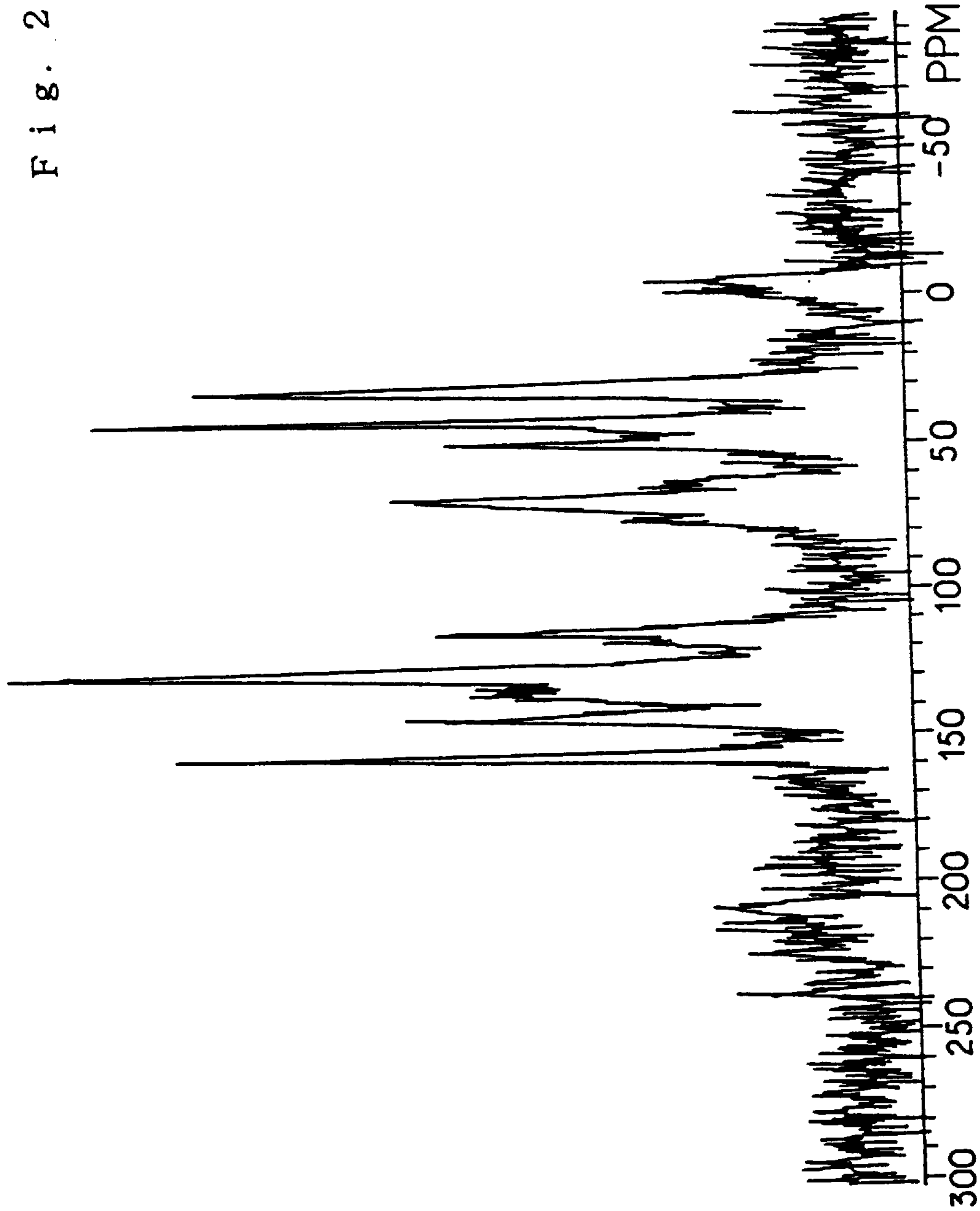

**INTERNATIONAL SEARCH REPORT**

International application No. PCT/JP98/01373

A. CLASSIFICATION OF SUBJECT MATTER
Int.Cl$^6$ C08G59/40, C08L63/00, C08K5/56, C08L83/16

According to International Patent Classification (IPC) or to both national classification and IPC

B. FIELDS SEARCHED

Minimum documentation searched (classification system followed by classification symbols)
Int.Cl$^6$ C08G59/40, C08L63/00-63/10, C08K5/56, C08L83/16

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 8-337708, A (Toshiba Corp.), December 24, 1996 (24. 12. 96), Claims ; Par. Nos. [0025], [0037], [0055], [0058] (Family: none) | 1-41 |
| X | JP, 6-49178, A (Toshiba Corp.), February 22, 1994 (22. 02. 94), Claims ; Par. No. [0029] & US, 5637667, A & US, 5438113, A | 1-41 |
| X | JP, 63-193951, A (Ube Industries, Ltd.), August 11, 1988 (11. 08. 88), Claims ; page 2, upper left column to upper right column ; page 3, upper right column (Family: none) | 42-52 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| July 8, 1998 (08. 07. 98) | July 21, 1998 (21. 07. 98) |
| Name and mailing address of the ISA/ Japanese Patent Office | Authorized officer |
| Facsimile No. | Telephone No. |

Form PCT/ISA/210 (second sheet) (July 1992)